# EUROPEAN PATENT APPLICATION

(11) **EP 4 637 257 A1**
(43) Date of publication of application: **22.10.2025**
(21) Application number: 24830932.0
(22) Date of filing: 28.06.2024
(51) Int. Cl.: H04W 76/15

(54) **COMMUNICATION METHOD AND RELATED APPARATUS**

(30) Priority: 28.06.2023 CN 202310790310
(71) Applicant: Huawei Technologies Co., Ltd., Shenzhen, Guangdong 518129 (CN)
(72) Inventor: GUO, Yuchen, Shenzhen, Guangdong 518129 (CN); ZHAO, Yue, Shenzhen, Guangdong 518129 (CN); GAN, Ming, Shenzhen, Guangdong 518129 (CN)
(74) Representative: Huawei European IPR
(86) International application number: PCT/CN2024/102173
(87) International publication number: WO 2025/002300

(57) **Abstract**

A communication method and a related apparatus are disclosed, are applied to a wireless local area network system supporting 802.11 series protocols such as a next-generation Wi-Fi protocol of IEEE 802.11ax like 802.11be, Wi-Fi 7, or EHT, a next generation of 802.1 The like Wi-Fi 8 or UHR, or Wi-Fi AI, and may be further applied to an ultra-bandwidth-based wireless personal local area network system and a sensing (sensing) system. An AP MLD sends at least one first frame on at least one first link. The first frame indicates an effective start time of traffic identifier-to-link mapping. When the TID-to-link mapping indicates a second link to be disabled, the AP MLD disables the second link not earlier than a time point Tb. When the TID-to-link mapping indicates a second link to be enabled, the AP MLD enables the second link not later than a time point Ta. Ta is earlier than Tb. This application can improve reliability of communication.

## Description

This application claims priority to Chinese Patent Application No. 202310790310.7, filed with the China National Intellectual Property Administration on June 28, 2023, and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With development of wireless technologies, more wireless devices support multi-link communication. For example, the devices support simultaneous communication on 2.4 GHz, 5 GHz, and 6 GHz frequency bands, or support communication on different channels of a same frequency band. This improves a communication rate between wireless devices. The device that supports multi-link communication is usually referred to as a multi-link device (multi-link device, MLD).

Before multi-link communication is performed between MLDs, multi-link establishment (or referred to as multi-link association) needs to be performed first. To better perform traffic management, traffic identifier (traffic ID, TID)-to-link mapping (TID-to-link mapping) may be performed, to provide different services for different traffic. Usually, the TID-to-link mapping is carried in a TID-to-link mapping element (TID-to-Link Mapping element).

As specified in the 802.11be standard, an access point multi-link device (access point multi-link device, AP MLD) may indicate, by using a mapping switch time (mapping switch time) field in a TID-to-link mapping element carried in a beacon (beacon) frame or probe response (probe response) frame, an effective start time of TID-to-link mapping. The indicated effective start time of the TID-to-link mapping may be a target beacon transmission time (target beacon transmission time, TBTT) indicated by a delivery traffic indication map (delivery traffic indication map, DTIM) beacon frame of any link. It may be understood that a TBTT of a link (for example, a link 1) is a time unit (time unit, TU) boundary of the link, but is not necessarily a TU boundary of another link (for example, a link 2 or a link 3) (this is because values of time synchronization function (time synchronization function, TSF) timers of different links are independently selected, and when the least significant 10 bits of a TSF timer of the link (for example, the link 1) are 0, the least significant 10 bits of a TSF timer of another link are not necessarily 0). However, time precision that can be indicated by a mapping switch time field in a TID-to-link mapping element is TU (1 TU = 1024 µs). As a result, a mapping switch time field in a TID-to-link mapping element on one link cannot indicate a TU boundary of another link, and cannot indicate a TBTT of the another link. In other words, the AP MLD cannot accurately indicate the effective start time of the TID-to-link mapping. This is unfavorable to reliable communication between the AP MLD and a non-access point multi-link device (non-access point multi-link device, non-AP MLD).

### SUMMARY

This application provides a communication method and a related apparatus, to facilitate reliable communication between an AP MLD and a non-AP MLD.

According to a first aspect, this application provides a communication method. The method is applied to an AP MLD, and the AP MLD may be the AP MLD itself, or may be a module or a chip in the AP MLD. The method includes: An AP MLD generates at least one first frame; and the AP MLD sends the at least one first frame on at least one first link, where the first frame indicates an effective start time of traffic identifier-to-link mapping. When the TID-to-link mapping indicates a second link to be disabled, the AP MLD disables the second link not earlier than a time point Tb; or when the TID-to-link mapping indicates a second link to be enabled, the AP MLD enables the second link not later than a time point Ta; and Ta is earlier than Tb, Ta and/or Tb are/is determined based on a first time and/or a second time, and the first time is a target beacon transmission time TBTT corresponding to a delivery traffic indication map DTIM beacon frame of a third link. When the first link is the same as the third link, the effective start time, indicated by the first frame sent on the first link, of the TID-to-link mapping is the first time; or when the first link is different from the third link, the effective start time, indicated by the first frame sent on the first link, of the TID-to-link mapping is the second time, where the second time is a time unit TU boundary of the first link.

It may be understood that, if no traffic identifier (TID) is mapped to a link in any direction (including uplink and downlink) according to an indication of the TID-to-link mapping, the link is to be disabled; or if a traffic identifier (TID) is mapped to a link in any direction (including uplink and downlink) according to an indication of the TID-to-link mapping, the link is to be enabled.

In this application, if it is determined, based on the indication of the TID-to-link mapping, that a link (for example, the second link is used as an example for illustrative description in this application) is to be disabled, the AP MLD is disabled the latest (that is, later than disabling times of all non-AP MLDs that establish multi-link communication with the AP MLD). Therefore, it can be ensured that the AP MLD can normally receive data/information from the non-AP MLDs. If it is determined, based on the indication of the TID-to-link mapping, that a link (for example, the second link is used as an example for illustrative description in this application) is to be enabled, the AP MLD is enabled the earliest (that is, earlier than enabling times of all non-AP MLDs that establish multi-link communication with the AP MLD). Therefore, it can be ensured that the AP MLD can normally receive data/information from the non-AP MLDs. Based on this, a problem that reliable communication cannot be performed between the AP MLD and the non-AP MLD when the AP MLD and the non-AP MLD have inconsistent understandings of effective time of the mapping can be resolved.

In a possible implementation, when the TID-to-link mapping indicates the second link to be disabled, the AP MLD does not initiate transmission to a first non-AP MLD on the second link later than Ta; or
when the TID-to-link mapping indicates the second link to be enabled, the AP MLD does not initiate transmission to a first non-AP MLD on the second link earlier than Tb.

In this implementation, if the second link is to be disabled, the AP MLD does not initiate transmission to the first non-AP MLD on the second link later than Ta. Therefore, it can be ensured that the non-AP MLD can normally receive data/information from the AP MLD. This helps improve reliability of communication between the AP MLD and the non-AP MLD. Similarly, if the second link is to be enabled, the AP MLD does not initiate transmission to the first non-AP MLD on the second link earlier than Tb. Therefore, it can also be ensured that the non-AP MLD can normally receive data/information from the AP MLD. This helps improve reliability of communication between the AP MLD and the non-AP MLD.

In a possible implementation, when the TID-to-link mapping indicates the second link to be disabled, the AP MLD ends transmission with the first non-AP MLD on the second link before Ta; or
when the TID-to-link mapping indicates the second link to be enabled, the AP MLD is capable of initiating transmission to the first non-AP MLD on the second link only after Tb.

In a possible implementation, the AP MLD does not initiate transmission to a first non-AP MLD on the second link later than Ta and earlier than Tb.

In this implementation, the AP MLD is restricted not to initiate transmission to the first non-AP MLD on the second link later than Ta and earlier than Tb (for example, within [Ta, Tb] or (Ta, Tb)), it can be ensured that the non-AP MLD can normally receive data/information from the AP MLD, thereby improving reliability of communication between the AP MLD and the non-AP MLD. It should be noted that this implementation is applicable to both a case in which the second link is to be disabled or the second link is to be enabled.

In a possible implementation, the second time is a TU boundary closest to the first time of the first link.

In this implementation, the second time is the TU boundary closest to the first time of the first link, and a time interval between Tb and Ta may be shortened, so that a time period in which the AP MLD cannot initiate transmission to the non-AP MLD is shorter. It should be noted that the following separately describes different manners of setting values of Tb and Ta, so that implementation solutions of this application are more diversified and more applicable.

In a possible implementation, the second time is before the first time, and the second time is the TU boundary closest to the first time of the first link.

In a possible implementation, Ta is a difference between the first time and a length of a TU, and Tb is the first time; or
Ta is a smallest time in all second times corresponding to all first links of the AP MLD, and Tb is the first time.

In a possible implementation, Ta is a smallest time in all second times corresponding to all first links established between the first non-AP MLD and the AP MLD, and Tb is the first time.

In a possible implementation, Ta is a largest time in all second times corresponding to all first links established between the first non-AP MLD and the AP MLD, and Tb is the first time.

In a possible implementation, the second time is after the first time, and the second time is the TU boundary closest to the first time of the first link.

In a possible implementation, Ta is the first time, and Tb is a sum of the first time and a length of a TU; or
Ta is the first time, and Tb is a largest time in all second times corresponding to all first links of the AP MLD.

In a possible implementation, Ta is the first time, and Tb is a largest time in all second times corresponding to all first links established between the first non-AP MLD and the AP MLD.

In a possible implementation, Ta is the first time, and Tb is a smallest time in the first time and/or all second times corresponding to all first links established between the first non-AP MLD and the AP MLD.

In a possible implementation, Ta is a smallest time in the first time and/or all second times corresponding to all first links of the AP MLD, and Tb is a largest time in the first time and/or all the second times corresponding to all the first links of the AP MLD.

In a possible implementation, Ta is a smallest time in the first time and/or all second times corresponding to all first links established between the first non-AP MLD and the AP MLD, and Tb is a largest time in the first time and/or all the second times corresponding to all the first links established between the first non-AP MLD and the AP MLD.

In a possible implementation, the first non-AP MLD is all non-AP MLDs that establish multi-link communication with the AP MLD.

In this implementation, when the first non-AP MLD is all the non-AP MLDs that establish multi-link communication with the AP MLD, values of Ta and Tb are applicable to all the non-AP MLDs that establish multi-link communication with the AP MLD. The operation is simple, and the application scope is wide.

In a possible implementation, the first non-AP MLD is one of the non-AP MLDs that establish multi-link communication with the AP MLD.

In this implementation, when the first non-AP MLD is one of the non-AP MLDs that establish multi-link communication with the AP MLD, values of Ta and Tb are applicable to the one non-AP MLD that establishes multi-link communication with the AP MLD. Tb - Ta may be reduced (that is, a time interval between Tb and Ta is shortened), so that a time period in which the AP MLD cannot initiate transmission to the non-AP MLD is shorter.

In a possible implementation, the TU boundary is a time point at which the least significant 10 bits of a time synchronization function TSF timer are 0.

In a possible implementation, the first frame is a beacon frame or a probe response frame.

In this implementation, when the first frame is the beacon frame or the probe response frame, the first frame may be sent through broadcast, so that more non-AP MLDs can receive the first frame.

In a possible implementation, the effective start time of the TID-to-link mapping is indicated by a mapping switch time (mapping switch time) field in the first frame.

In a possible implementation, effective start times, indicated by different first frames, of the TID-to-link mapping are different.

According to a second aspect, this application provides a communication method. The method is applied to a non-AP MLD, and the non-AP MLD may be the non-AP MLD itself, or may be a module or a chip in the non-AP MLD. The method includes:

A non-AP MLD receives at least one first frame on at least one first link, where the first frame indicates an effective start time of traffic identifier-to-link mapping; and
the non-AP MLD determines a target effective start time of the TID-to-link mapping based on the at least one first frame.

In this application, the non-AP MLD may obtain multiple pieces of different time information (namely, effective start times, indicated by all of a plurality of first frames, of the TID-to-link mapping) from a plurality of first links. Therefore, the non-AP MLD may select one piece of time information from the multiple pieces of different time information as the target effective start time of the TID-to-link mapping, and further, the non-AP MLD may use the selected target effective start time as a time at which a link is actually enabled or disabled (herein, the link that is enabled or disabled may be determined based on a TID-to-link mapping relationship).

In a possible implementation, effective start times, indicated by different first frames, of the TID-to-link mapping are different.

In a possible implementation, that the non-AP MLD determines an effective start time of the TID-to-link mapping based on the at least one first frame includes:

The non-AP MLD determines, from at least one effective start time, indicated by the at least one first frame, of the TID-to-link mapping, one effective start time of the TID-to-link mapping as the target effective start time of the TID-to-link mapping.

In this implementation, the non-AP MLD may randomly select one piece of time information from multiple pieces of different time information as the target effective start time of the TID-to-link mapping. This implementation is flexible.

In a possible implementation, the target effective start time of the TID-to-link mapping is a largest effective start time in the at least one effective start time of the TID-to-link mapping.

In this implementation, the non-AP MLD may select a largest one from multiple pieces of different time information as the target effective start time of the TID-to-link mapping. This helps shorten a time interval between Tb and Ta.

In a possible implementation, the target effective start time of the TID-to-link mapping is a smallest effective start time in the at least one effective start time of the TID-to-link mapping.

In this implementation, the non-AP MLD may select a smallest one from multiple pieces of different time information as the target effective start time of the TID-to-link mapping. This helps shorten a time interval between Tb and Ta.

In a possible implementation, the first frame is a beacon frame or a probe response frame.

In this implementation, when the first frame is the beacon frame or the probe response frame, the first frame may be sent through broadcast, so that more non-AP MLDs can receive the first frame.

In a possible implementation, the effective start time of the TID-to-link mapping is indicated by a mapping switch time (mapping switch time) field in the first frame.

According to a third aspect, this application provides a communication apparatus. The communication apparatus may be an AP MLD or a chip in an AP MLD, for example, a Wi-Fi chip. The communication apparatus includes: a processing unit, configured to generate at least one first frame; and a transceiver unit, configured to send the at least one first frame on at least one first link, where the first frame indicates an effective start time of traffic identifier-to-link mapping. When the TID-to-link mapping indicates a second link to be disabled, the AP MLD disables the second link not earlier than a time point Tb; or when the TID-to-link mapping indicates a second link to be enabled, the AP MLD enables the second link not later than a time point Ta; and Ta is earlier than Tb, Ta and/or Tb are/is determined based on a first time and/or a second time, and the first time is a target beacon transmission time TBTT corresponding to a delivery traffic indication map DTIM beacon frame of a third link. When the first link is the same as the third link, the effective start time, indicated by the first frame sent on the first link, of the TID-to-link mapping is the first time; or when the first link is different from the third link, the effective start time, indicated by the first frame sent on the first link, of the TID-to-link mapping is the second time, where the second time is a time unit TU boundary of the first link.

In a possible implementation, when the TID-to-link mapping indicates the second link to be disabled, the AP MLD does not initiate transmission to a first non-AP MLD on the second link later than Ta; or
when the TID-to-link mapping indicates the second link to be enabled, the AP MLD does not initiate transmission to a first non-AP MLD on the second link earlier than Tb.

In a possible implementation, when the TID-to-link mapping indicates the second link to be disabled, the AP MLD ends transmission with the first non-AP MLD on the second link before Ta; or
when the TID-to-link mapping indicates the second link to be enabled, the AP MLD is capable of initiating transmission to the first non-AP MLD on the second link only after Tb.

In a possible implementation, the AP MLD does not initiate transmission to a first non-AP MLD on the second link later than Ta and earlier than Tb.

In a possible implementation, the second time is a TU boundary closest to the first time of the first link.

In a possible implementation, the second time is before the first time, and the second time is the TU boundary closest to the first time of the first link.

In a possible implementation, Ta is a difference between the first time and a length of a TU, and Tb is the first time; or
Ta is a smallest time in all second times corresponding to all first links of the AP MLD, and Tb is the first time.

In a possible implementation, Ta is a smallest time in all second times corresponding to all first links established between the first non-AP MLD and the AP MLD, and Tb is the first time.

In a possible implementation, Ta is a largest time in all second times corresponding to all first links established between the first non-AP MLD and the AP MLD, and Tb is the first time.

In a possible implementation, the second time is after the first time, and the second time is the TU boundary closest to the first time of the first link.

In a possible implementation, Ta is the first time, and Tb is a sum of the first time and a length of a TU; or Ta is the first time, and Tb is a largest time in all second times corresponding to all first links of the AP MLD.

In a possible implementation, Ta is the first time, and Tb is a largest time in all second times corresponding to all first links established between the first non-AP MLD and the AP MLD.

In a possible implementation, Ta is the first time, and Tb is a smallest time in the first time and/or all second times corresponding to all first links established between the first non-AP MLD and the AP MLD.

In a possible implementation, Ta is a smallest time in the first time and/or all second times corresponding to all first links of the AP MLD, and Tb is a largest time in the first time and/or all the second times corresponding to all the first links of the AP MLD.

In a possible implementation, Ta is a smallest time in the first time and/or all second times corresponding to all first links established between the first non-AP MLD and the AP MLD, and Tb is a largest time in the first time and/or all the second times corresponding to all the first links established between the first non-AP MLD and the AP MLD.

In a possible implementation, the first non-AP MLD is all non-AP MLDs that establish multi-link communication with the AP MLD.

In a possible implementation, the first non-AP MLD is one of the non-AP MLDs that establish multi-link communication with the AP MLD.

In a possible implementation, the TU boundary is a time point at which the least significant 10 bits of a time synchronization function TSF timer are 0.

In a possible implementation, the first frame is a beacon frame or a probe response frame.

In a possible implementation, the effective start time of the TID-to-link mapping is indicated by a mapping switch time (mapping switch time) field in the first frame.

In a possible implementation, effective start times, indicated by different first frames, of the TID-to-link mapping are different.

According to a fourth aspect, this application provides a communication apparatus. The communication apparatus may be a non-AP MLD or a chip in a non-AP MLD, for example, a Wi-Fi chip. The communication apparatus includes: a transceiver unit, configured to receive at least one first frame on at least one first link, where the first frame indicates an effective start time of traffic identifier-to-link mapping; and a processing unit, configured to determine a target effective start time of the TID-to-link mapping based on the at least one first frame.

In a possible implementation, effective start times, indicated by different first frames, of the TID-to-link mapping are different.

In a possible implementation, when determining the effective start time of the TID-to-link mapping based on the at least one first frame, the processing unit is configured to:
determine, from at least one effective start time, indicated by the at least one first frame, of the TID-to-link mapping, one effective start time of the TID-to-link mapping as the target effective start time of the TID-to-link mapping.

In a possible implementation, the target effective start time of the TID-to-link mapping is a largest effective start time in the at least one effective start time of the TID-to-link mapping.

In a possible implementation, the target effective start time of the TID-to-link mapping is a smallest effective start time in the at least one effective start time of the TID-to-link mapping.

In a possible implementation, the first frame is a beacon frame or a probe response frame.

In a possible implementation, the effective start time of the TID-to-link mapping is indicated by a mapping switch time (mapping switch time) field in the first frame.

According to a fifth aspect, this application provides a communication apparatus. The communication apparatus includes a processor, and the processor is configured to execute a computer program, so that the communication apparatus performs the method according to any one of the first aspect or the second aspect.

In a possible design, the communication apparatus may be a chip implementing the method according to the first aspect or the second aspect or a device including the chip.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory.

According to a sixth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus, and the processor is configured to implement the method according to any one of the first aspect or the second aspect through a logic circuit or by executing code instructions.

According to a seventh aspect, this application provides a computer-readable storage medium. The storage medium stores a computer program or instructions. When the computer program or the instructions are executed by a computer, the method according to any one of the first aspect or the second aspect is implemented.

According to an eighth aspect, this application provides a computer program product. When a computer reads and executes the computer program product, the computer is enabled to perform the method according to any one of the first aspect or the second aspect.

According to a ninth aspect, this application provides a communication system. The communication system includes an AP MLD and a non-AP MLD. The AP MLD may be configured to implement the method according to any one of the first aspect, and the non-AP MLD is configured to implement the method according to any one of the second aspect.

For beneficial effects of the third aspect to the ninth aspect, refer to related beneficial effects of the first aspect and the second aspect. Details are not described herein again.

### BRIEF DESCRIPTION OF DRAWINGS

FIG. 1 is a diagram of an architecture of a wireless communication system according to an embodiment of this application;
FIG. 2 is a diagram of multi-link communication according to an embodiment of this application;
FIG. 3a is a diagram of a connection manner between anAP MLD and a non-AP MLD according to an embodiment of this application;
FIG. 3b is a diagram of another connection manner between an AP MLD and a non-AP MLD according to an embodiment of this application;
FIG. 3c is a diagram of an antenna of an MLD according to an embodiment of this application;
FIG. 4a is a diagram of a communication scenario according to an embodiment of this application;
FIG. 4b is a diagram of another communication scenario according to an embodiment of this application;
FIG. 5 is a diagram of a frame structure of a TID-to-link mapping element according to an embodiment of this application;
FIG. 6 is a diagram of a scenario in which a mapping switch time field in a beacon frame indicates an effective start time of traffic identifier-to-link mapping;
FIG. 7 is a schematic flowchart of a communication method according to an embodiment of this application;
FIG. 8a is a diagram of a scenario for Ta and Tb according to an embodiment of this application;
FIG. 8b is a diagram of another scenario for Ta and Tb according to an embodiment of this application;
FIG. 8c is a diagram of still another scenario for Ta and Tb according to an embodiment of this application;
FIG. 8d is a diagram of still another scenario for Ta and Tb according to an embodiment of this application;
FIG. 8e is a diagram of still another scenario for Ta and Tb according to an embodiment of this application;
FIG. 9a is a diagram of still another scenario for Ta and Tb according to an embodiment of this application;
FIG. 9b is a diagram of still another scenario for Ta and Tb according to an embodiment of this application;
FIG. 9c is a diagram of still another scenario for Ta and Tb according to an embodiment of this application;
FIG. 9d is a diagram of still another scenario for Ta and Tb according to an embodiment of this application;
FIG. 9e is a diagram of still another scenario for Ta and Tb according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms "include" and "have" and any other variations thereof are intended to cover a non-exclusive inclusion. For example, processes, methods, systems, products, or devices that include a series of steps or units are not limited to the listed steps or units, but optionally further include an unlisted step or unit, or optionally further include another step or unit inherent to these processes, methods, products, or devices.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with another embodiment.

In this application, "at least one (item)" means one or more, "a plurality of" means two or more, and "at least two (items)" means two or three or more. "And/or" is used to describe an association relationship between associated objects, and indicates that three relationships may exist. For example, "A and/or B" may indicate: Only A exists, only B exists, and both A and B exist, where A and B may be singular or plural. "Or" indicates that two relationships may exist, for example, only A exists, and only B exists. When A and B are mutually exclusive, it may also indicate that three relationships exist, for example, only A exists, only B exists, and both A and B exist. A character "/" generally indicates an "or" relationship between the associated objects. "At least one of the following" or a similar expression thereof means any combination of these items. For example, at least one of a, b, or c may indicate: a, b, c, "a and b", "a and c", "b and c", or "a, b, and c".

The technical solutions provided in embodiments of this application may be applied to a WLAN system, for example, Wi-Fi. For example, the method provided in embodiments of this application is applicable to IEEE 802.11 series protocols such as an 802.11a/b/g protocol, an 802.11n protocol, an 802.11ac protocol, an 802.11ax protocol, an 802.11be protocol, or a next-generation protocol. Examples are not enumerated herein. The technical solutions provided in embodiments of this application may be further applied to a wireless personal area network (wireless personal area network, WPAN) based on an ultra-wideband (ultra-wideband, UWB) technology. For example, the method provided in embodiments of this application is applicable to IEEE 802.15 series protocols such as an 802.15.4a protocol, an 802.15.4z protocol, an 802.15.4ab protocol, or a future generation of UWB WPAN protocol. Examples are not enumerated herein. The technical solutions provided in embodiments of this application may be further applied to various other communication systems, for example, an internet of things (internet of things, IoT) system, a vehicle to X (vehicle to X, V2X) system, and a narrowband internet of things (narrowband internet of things, NB-IoT) system, may be applied to a device in the internet of vehicles, an IoT node, a sensor, and the like in the internet of things (internet of things, IoT), a smart camera, a smart remote control, and a smart water/electricity meter in a smart home, a sensor in a smart city, and the like, or is further applicable to a long term evolution (long term evolution, LTE) system, a 5th-generation (5th-generation, 5G) communication system, a new communication system emerging in future communication development, and the like.

The WLAN system can provide high-rate and low-latency transmission. With continuous evolution of WLAN application scenarios, the WLAN system is applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, a wearable device such as augmented reality (augmented reality, AR) or virtual reality (virtual reality, VR)), a smart device (for example, a printer, a projector, a speaker, or a stereo) in smart office, an internet of vehicles device in the internet of vehicles, an infrastructure (for example, a vending machine, a self-service navigation console of a supermarket, a self-service cashier, or a self-service ordering machine) in a daily life scenario, a device in a large sports and music venue, and the like. For example, the access point and the station each may be a device used the internet of vehicles, an internet of things node, a sensor, or the like in the internet of things, a smart camera, a smart remote control, a smart water/electricity meter in a smart home, a sensor in a smart city, or the like.

Although embodiments of this application mainly use a WLAN as an example, especially a network applied to IEEE 802.11 series standards, for example, a system supporting Wi-Fi 7 that may also be referred to as extremely high throughput (extremely high throughput, EHT), and for another example, a system supporting Wi-Fi 8 that may also be referred to as ultra high reliability (ultra high reliability, UHR) or ultra high reliability and throughput (ultra high reliability and throughput, UHRT). A person skilled in the art easily understands that various aspects in embodiments of this application may be extended to another network using various standards or protocols, for example, Bluetooth (Bluetooth), a high performance radio LAN (high performance radio LAN, HIPERLAN) (a wireless standard similar to the IEEE 802.11 standard, mainly used in Europe), a wide area network (WAN), or another network that is known currently or developed in the future. Therefore, regardless of a used coverage area and a used wireless access protocol, the various aspects provided in embodiments of this application are applicable to any suitable wireless network.

A multi-link device includes one or more affiliated stations. The affiliated station is a logical station, and may operate on a link, a frequency band, a channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device), or a multi-link device whose affiliated station is a non-AP STA is referred to as a multi-link non-AP, a multi-link non-AP device, or a non-AP multi-link device (non-AP multi-link device, non-AP MLD). The multi-link device (which may be a non-AP MLD or an AP MLD herein) is a communication apparatus having a wireless communication function. The communication apparatus may be an entire device, or may be a chip, a processing system, or the like installed in the entire device. The device in which the chip or the processing system is installed may implement the method and a function in embodiments of this application under control of the chip or the processing system.

The multi-link device may implement wireless communication according to the 802.11 series protocols, for example, comply with extremely high throughput (Extremely High Throughput, EHT), or comply with and be based on the 802.11be, or be compatible with and support the 802.1 1be, to implement communication with another device. Certainly, the another device may be a multi-link device, or may not be a multi-link device.

Each logical station may operate on one link, and a plurality of logical stations are allowed to operate on a same link. A link identifier may represent one station operating on one link, that is, if there is more than one logical station on one link, more than one link identifier may be used to represent the logical stations. The link identifier sometimes also indicates a station operating on the link. When data transmission between a multi-link device and another multi-link device, before communication, the multi-link device and the another multi-link device may first negotiate or communicate with each other about a correspondence between a link identifier and a link or a station on a link, or an AP MLD indicates a correspondence between a link identifier and a link or a station on a link through a broadcast management frame, for example, a beacon (beacon) frame. Therefore, during data transmission, the link identifier is carried to indicate the link or the station on the link, instead of transmitting a large amount of signaling. This reduces signaling overheads and improves transmission efficiency.

An example in which the foregoing one multi-link device is an AP MLD and the foregoing another multi-link device is a non-AP MLD is used for description below. In an example, when the AP MLD establishes a basic service set (basic service set, BSS), a management frame sent by the AP MLD, for example, a multi-link probe response (probe response) frame carries one or more multi-link elements. A link information field included in the multi-link element may be used to establish a correspondence between a link identifier and a station operating on a link.

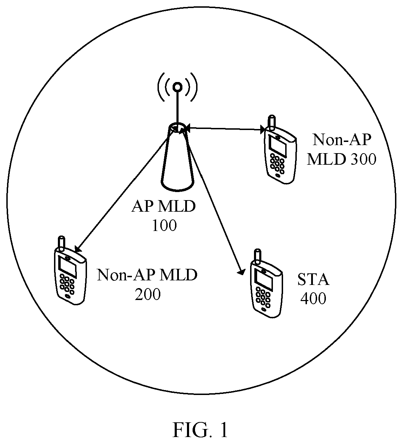

FIG. 1 is a diagram of an architecture of a wireless communication system according to an embodiment of this application. As shown in FIG. 1, the wireless communication system includes at least one AP MLD (for example, an AP MLD 100 in FIG. 1) and at least one non-AP MLD (for example, a non-AP MLD 200 and a non-AP MLD 300 in FIG. 1). Optionally, FIG. 1 further includes a legacy station (for example, a single-link non-AP STA 400 in FIG. 1, also referred to as a STA 400) supporting transmission only on a single link. The AP MLD is a device that provides a service for the non-AP MLD, and the non-AP MLD may communicate with the AP MLD on a plurality of links, to increase throughput. A STA in the non-AP MLD may also communicate with an AP in the AP MLD on a link. It may be understood that quantities of AP MLDs and non-AP MLDs in FIG. 1 are merely an example.

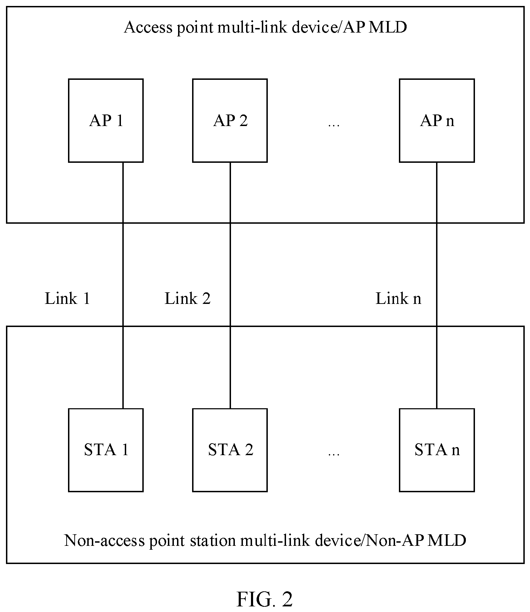

Optionally, FIG. 2 is a diagram of multi-link communication according to an embodiment of this application. As shown in FIG. 2, an AP MLD includes an AP 1, an AP 2, ..., and an AP n, and a non-AP MLD includes a STA 1, a STA 2, ..., and a STA n. Herein, n is a positive integer. The AP MLD and the non-AP MLD may perform parallel communication on a link 1, a link 2, ..., and a link n. The STA 1 in the non-AP MLD establishes an association relationship with the AP 1 in the AP MLD, the STA 2 in the non-AP MLD establishes an association relationship with the AP 2 in the AP MLD, and the STA n in the non-AP MLD establishes an association relationship with the AP n in the AP MLD. Therefore, one or more STAs in the non-AP MLD and one or more APs in the AP MLD may communicate with each other after establishing an association relationship. Frequency bands in which multi-link devices (including the AP MLD and the non-AP MLD) operate may include but are not limited to sub-1 GHz, 2.4 GHz, 5 GHz, 6 GHz, and high-frequency 60 GHz. For example, the method provided in embodiments of this application is applicable to but is not limited to single-layer uplink/downlink transmission, multi-user uplink/downlink transmission, vehicle-to-everything (vehicle-to-everything, V2X, where X may represent everything) communication, and device-to-device (device-to-device, D2D) communication. For example, the V2X communication may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

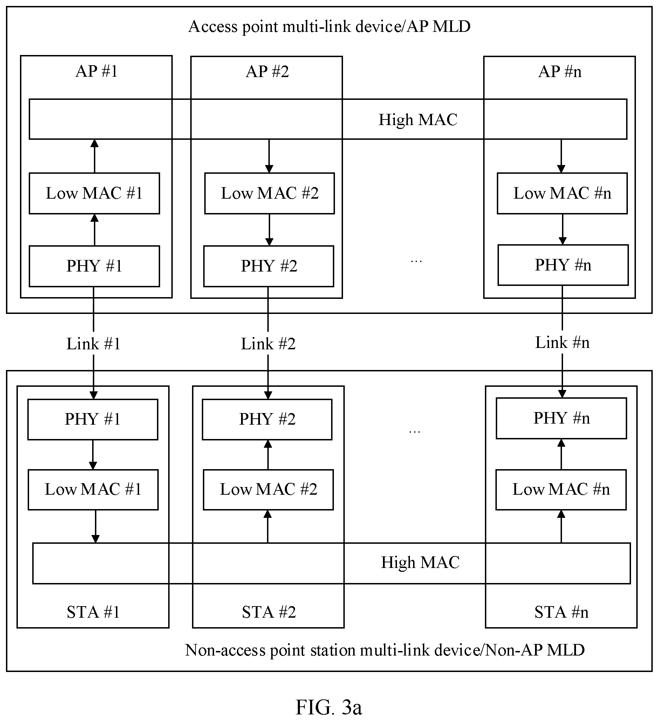

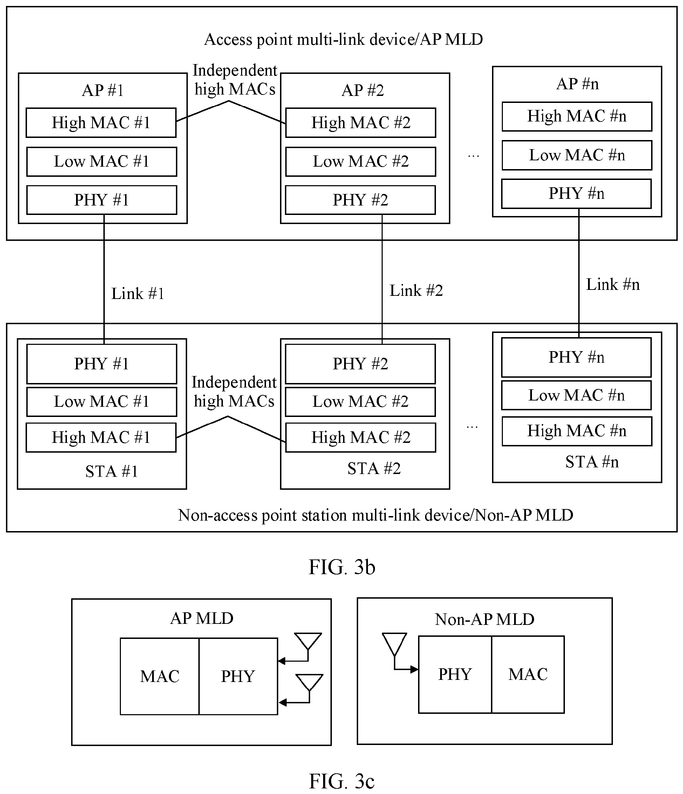

FIG. 3a and FIG. 3b are diagrams of connection manners between an AP MLD and a non-AP MLD according to an embodiment of this application. The 802.11 standard focuses on 802.11 physical layer (physical layer, PHY) and medium access control (medium access control, MAC) layer parts in a multi-link device. Therefore, FIG. 3a and FIG. 3b show only examples of a PHY and examples of a MAC layer.

As shown in FIG. 3a and FIG. 3b, multi-link devices (such as an AP MLD and a non-AP MLD) each may include physical layer (physical layer, PHY) processing circuits (PHY #1, PHY #2, and PHY #n shown in FIG. 3a) and medium access control (medium access control, MAC) layer processing circuits, where the physical layer processing circuit may be configured to process a physical layer signal, and the MAC layer processing circuit may be configured to process a MAC layer signal. Further, the MAC layer may be further divided into one high-MAC (high-MAC) layer (for example, high MAC shown in FIG. 3a, and high MAC #1 to high MAC #n shown in FIG. 3b) and a plurality of low-MAC (low-MAC) layers (for example, low MAC #1, low MAC #2, ..., and low MAC #n shown in FIG. 3a and FIG. 3b). As shown in FIG. 3a, a plurality of APs included in the AP MLD are independent of each other at the low-MAC layers and the PHY, and share the high-MAC layer. A plurality of STAs included in the non-AP MLD are independent of each other at the low-MAC layers and the PHY, and share the high-MAC layer. The high-MAC layer is separately connected to the plurality of low-MAC layers, that is, the high-MAC layer is shared by a plurality of links. As shown in FIG. 3b, a plurality of APs included in the AP MLD are independent of each other at the low-MAC layers and the PHY, and are also independent of each other at the high-MAC layers. A plurality of STAs of the non-AP MLD device are independent of each other at the low-MAC layers and the PHY, and are also independent of each other at the high-MAC layers. For example, the high-MAC layer mainly completes operations like allocation, encryption, and decryption of a sequence number (sequence number, SN) and a packet number (packet number, PN) of a MAC service data unit (MAC service data unit, MSDU). For example, the low-MAC layer mainly completes operations like assembly, channel access, packet sending, and reception acknowledgment of a MAC protocol data unit (MAC protocol data unit, MPDU) of a respective link.

In FIG. 3a, the PHY #1 layer, the low MAC #1 layer, and the high-MAC layer in the AP MLD may be considered as an AP #1, the PHY #2 layer, the low MAC #2 layer, and the high-MAC layer may be considered as an AP #2, ..., and the PHY #n layer, the low MAC #n layer, and the high-MAC layer may be considered as an AP #n. In other words, it may be understood as that the AP MLD includes n AP entities. In the non-AP MLD, the situation is similar. To be specific, the high-MAC layer in the non-AP MLD is also shared by the plurality of links, the PHY #1 layer, the low MAC #1 layer, and the high-MAC layer are considered as a STA #1, the PHY #2 layer, the low MAC #2 layer, and the high-MAC layer are considered as a STA #2, ..., and the PHY #n layer, the low MAC #n layer, and the high-MAC layer are considered as a STA #n. In other words, it may be understood that the non-AP MLD includes n STA entities. As shown in FIG. 3a, the PHY #1 of the AP #1 in the AP MLD is connected to the PHY #1 of the STA #1 in the non-AP MLD, and the AP #1 in theAPMLD and the STA#1 in the non-AP MLD communicate on a link (for example, a link #1 shown in FIG. 3a). The PHY #2 of the AP #2 in the AP MLD is connected to the PHY #2 of the STA #2 in the non-AP MLD, and the AP #2 in the AP MLD and the STA #2 in the non-AP MLD communicate on a link (for example, a link #2 shown in FIG. 3a). The PHY #n of the AP #n in the AP MLD is connected to the PHY #n of the STA #n in the non-AP MLD, and the AP #n in the AP MLD and the STA #n in the non-AP MLD communicate on a link (for example, a link #n shown in FIG. 3a). For descriptions of FIG. 3b, refer to FIG. 3a. Details are not described herein again.

For example, both the high-MAC layer and the low-MAC layer may be implemented by a processor in a chip system of the multi-link device, or may be implemented by different processing modules in a chip system. Examples are not enumerated in embodiments of this application. It may be understood that FIG. 3a and FIG. 3b may be understood as that the multi-link devices each are divided into functional modules. The modules shown in FIG. 3a and FIG. 3b may be implemented in a form of hardware, or may be implemented in a form of software functional modules, or the like. The PHY and the MAC layer shown in FIG. 3a and FIG. 3b may be understood as logical function division, and there may be another division manner during actual implementation. In FIG. 3a and FIG. 3b, n may be equal to 0, or equal to 1, or n is an integer greater than 1, or the like.

For example, the multi-link device in embodiments of this application may be a single-antenna device, or may be a multi-antenna device. For example, the multi-link device may be a device with more than two antennas. A quantity of antennas included in the multi-link device is not limited in embodiments of this application. FIG. 3c is a diagram of an antenna of an MLD according to an embodiment of this application. In FIG. 3c, an example in which an AP MLD includes a plurality of antennas and a non-AP MLD includes a single antenna is used. However, it should not be understood as a limitation on embodiments of this application.

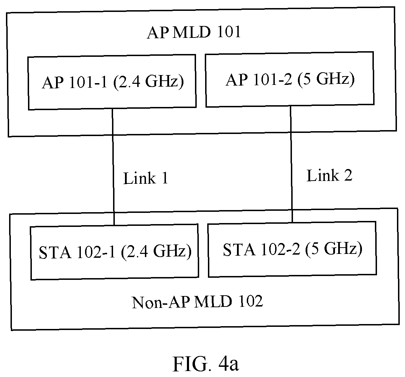

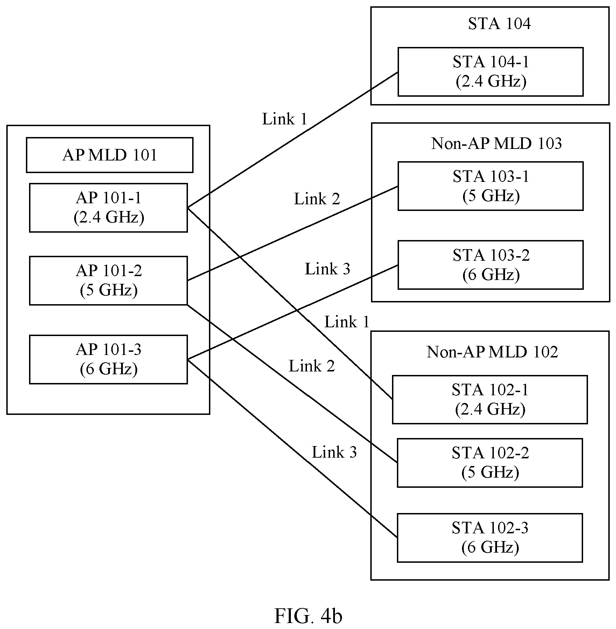

Frequency bands in which the multi-link device operates may include but are not limited to sub-1 GHz, 2.4 GHz, 5 GHz, 6 GHz, and high-frequency 60 GHz. FIG. 4a and FIG. 4b are two diagrams of communication between a multi-link device and another device on a plurality of links in a wireless local area network.

FIG. 4a shows a scenario in which an AP MLD 101 communicates with a non-AP MLD 102. The AP MLD 101 includes affiliated AP 101-1 and AP 101-2, the non-AP MLD 102 includes affiliated STA 102-1 and STA 102-2, and the AP MLD 101 and the non-AP MLD 102 perform parallel communication on a link 1 and a link 2.

For example, FIG. 4b shows a scenario in which an AP MLD 101 communicates with a non-AP MLD 102, a non-AP MLD 103, and a STA 104. The AP MLD 101 includes affiliated AP 101-1 to AP 101-3, the non-AP MLD 102 includes three affiliated STAs: a STA 102-1, a STA 102-2, and a STA 102-3, the non-AP MLD 103 includes two affiliated STAs: a STA 103-1 and a STA 103-2, and the STA 104 is a single-link device and includes a STA 104-1. The AP MLD 101 may separately communicate with the non-AP MLD 102 on a link 1, a link 2, and a link 3, communicate with the non-AP MLD 103 on a link 2 and a link 3, and communicate with the STA 104 on a link 1. In an example, the STA 104 operates in a 2.4 GHz frequency band; in the non-AP MLD 103, the STA 103-1 operates in a 5 GHz frequency band, and the STA 103-2 operates in a 6 GHz frequency band; and in the non-AP MLD 102, the STA 102-1 operates in a 2.4 GHz frequency band, the STA 102-2 operates in a 5 GHz frequency band, and the STA 102-3 operates in a 6 GHz frequency band. The AP 101-1 operating in the 2.4 GHz frequency band in the AP MLD 101 may communicate uplink or downlink data with the STA 104 and the STA 102-1 in the non-AP MLD 102 on the links 1. The AP 101-2 operating in the 5 GHz frequency band in the AP MLD 101 may communicate, on the link 2, uplink or downlink data with the STA 103-1 operating in the 5 GHz frequency band in the non-AP MLD 103, and also communicate, on the link 2, uplink or downlink data with the STA 102-2 operating in the 5 GHz frequency band in the non-AP MLD 102. The AP 101-3 operating in the 6 GHz frequency band in the AP MLD 101 may communicate, on the link 3, uplink or downlink data with the STA 102-3 operating in the 6 GHz frequency band in the non-AP MLD 102, and also communicate, on the link 3, uplink or downlink data with the STA 103-2 in the non-AP MLD.

FIG. 4a shows that the AP MLD supports only two frequency bands. In FIG. 4b, an example in which the AP MLD 101 supports only three frequency bands (2.4 GHz, 5 GHz, and 6 GHz), each frequency band corresponds to one link, and the AP MLD 101 may operate on one or more links of the link 1, the link 2, or the link 3 is used for illustration. On an AP side or a STA side, a link may also be understood as a station operating on the link. In actual application, the AP MLD and the non-AP MLD may further support more or fewer frequency bands, that is, the AP MLD and the non-AP MLD may operate on more links or fewer links. This is not limited in embodiments of this application. FIG. 4a and FIG. 4b are merely simple diagrams, and do not constitute any limitation on the protection scope of embodiments of this application.

The following explains and describes related technical features in embodiments of this application. It should be noted that these explanations are intended to facilitate understanding of embodiments of this application, but should not be considered as a limitation on the protection scope claimed in this application.

### 1. Traffic identifier-to-link mapping element (TID-to-link mapping element)

In a multi-link establishment process, if no operation of TID-to-link mapping is performed between multi-link devices, all traffic identifiers are mapped to each established link by default, in other words, all types of traffic can be transmitted on each established link.

In the multi-link establishment process, the TID-to-link mapping may be performed between the multi-link devices. For example, an AP MLD may include TID-to-link mapping information in a beacon (beacon) frame or a probe response (probe response) frame, so that all stations use a corresponding mapping manner after receiving the mapping information. A manner of carrying the mapping information in the beacon frame or the probe response frame is also referred to as broadcasting the TID-to-link mapping. This manner can effectively increase signaling transfer efficiency.

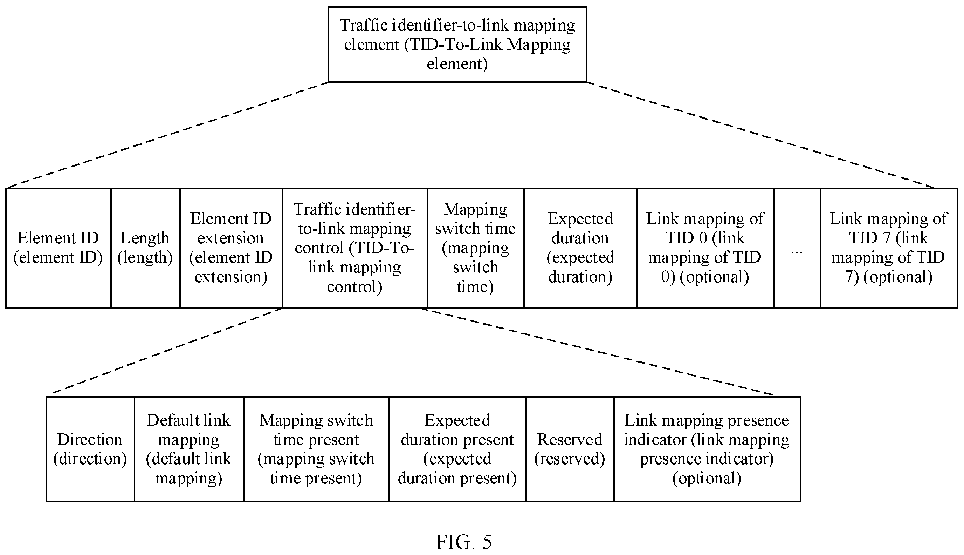

For example, the TID-to-link mapping information may be carried in a TID-to-link mapping element. FIG. 5 is a diagram of a frame structure of the TID-to-link mapping element according to an embodiment of this application. As shown in FIG. 5, the TID-to-link mapping element may include at least one of the following fields: element ID (element ID), length (length), element ID extension (element ID extension) (or referred to as element ID expansion), traffic identifier-to-link mapping control (TID-to-link mapping control), mapping switch time (mapping switch time), and expected duration (expected duration) (or referred to as prospective duration, desirable duration, desired duration, required duration, or the like). Optionally, the TID-to-link mapping element may further include at least one of the following fields: link mapping of TID 0 (link mapping of TID 0), ..., and link mapping of TID 7 (link mapping of TID 7).

For example, the mapping switch time field may indicate an effective start time of the TID-to-link mapping (or referred to as an effective time, a mapping effective time, or the like), or indicate an effective start time of a TID-to-link mapping relationship (or referred to as an effective time, a mapping effective time, or the like), or indicate a time at which a TID-to-link mapping relationship is established. The mapping switch time field is present when the TID-to-link mapping element is carried in the beacon frame or the probe response frame. When the foregoing mapping relationship has become effective, the beacon frame or the probe response frame may not carry the mapping switch time field.

Further, a value carried in the mapping switch time field may be determined based on a target beacon transmission time (target beacon transmission time, TBTT) of a future delivery traffic indication bitmap (delivery traffic indication map, DTIM) beacon frame. Optionally, the TBTT may also be described as a target sending time. The TBTT is in units of time units (time units, TUs), and 1 TU = 1024 µs. Generally, the AP MLD broadcasts a value of a time synchronization function (time synchronization function, TSF) timer (timer) in a beacon frame. After receiving the value of the TSF timer, a non-AP MLD may update a locally maintained system time to the value of the TSF timer, to achieve an objective that times of all non-AP MLDs are the same as that of the AP MLD in a BSS (namely, time synchronization).

For example, the value carried in the mapping switch time field may be set to an 11^{th} bit to a 26^{th} bit, that is, TSF[10:25] (bits 10 to 25 of the TSF) of the TSF timer corresponding to a case in which a new mapping relationship becomes effective. The TSF timer may be understood as a time value with a length of 64 bits and in units of microseconds (µs). For example, TSF timers corresponding to all non-AP MLDs on one link may be the same, and TSF timers corresponding to non-AP MLDs on different links may be different.

For example, the expected duration field may indicate an expected end time of a TID-to-link mapping relationship, or indicate an expected end time of TID-to-link mapping. For example, the expected duration field indicates effective duration (when the TID-to-link mapping element carries the mapping switch time field) or a remaining time (when the TID-to-link mapping element does not carry the mapping switch time field) of the TID-to-link mapping. The expected duration field is present when the TID-to-link mapping element is carried in the beacon frame or the probe response frame.

For example, the link mapping of TID 0 field may indicate a link to which a TID 0 is mapped. For example, the field may carry one bitmap, and each bit in the bitmap may correspond to one link. If a value of a bit is 1, it indicates that the TID 0 is mapped to a link corresponding to the bit. For another example, if a value of a bit is 0, it indicates that the TID 0 is not mapped to a link corresponding to the bit. For example, a length of the bitmap may be equal to a maximum quantity of links that can be associated between multi-link devices; or a length of the bitmap may be a fixed value, for example, 16 bits; or a length of the bitmap may be equal to a quantity of established associated links between multi-link devices, or the like. A manner of setting the length of the bitmap is not limited in embodiments of this application. For descriptions of a link mapping of another TID field, refer to the link mapping of TID 0 field. Details are not described herein again. The TID 0 to a TID 7 in embodiments of this application are merely examples. With evolution of standards, there may be more traffic types subsequently, for example, the TID 0 to a TID 15. Therefore, a quantity of link mapping of TID fields in the TID-to-link mapping element is not limited in embodiments of this application. For example, a quantity of link mapping of TID fields in the TID-to-link mapping element may be the same as a type of the TID. For example, when the TID is extended from the TID 0 to the TID 7 to the TID 0 to the TID 15, the quantity of link mapping of TID fields may be equal to 16.

When a TID is mapped to a link, it may be understood as that the link is enabled (enabled). When no TID is mapped to a link, it may be understood as that the link is disabled (disabled). The AP MLD may include the TID-to-link mapping element in the beacon frame or the probe response frame to enable or disable a link.

It may be understood that, for a unicast manner, when two communication parties negotiate for TID-to-link mapping information, the mapping information generally becomes effective immediately. The mapping switch time field and the expected duration field need to be sent for multiple times in the beacon frame or the probe response frame, to ensure that one or more non-AP MLDs can receive the TID-to-link mapping element. Therefore, the mapping switch time field and the expected duration field are present usually when the TID-to-link mapping element is carried in the beacon frame or the probe response frame.

For example, refer to FIG. 5. The TID-to-link mapping control field may include at least one of the following fields: direction (direction), default link mapping (default link mapping) (or referred to as default link mapping), mapping switch time present (mapping switch time present), expected duration present (expected duration present), reserved (reserved) (or referred to as retained), and link mapping presence indicator (link mapping presence indicator). Optionally, the TID-to-link mapping control field further includes the link mapping presence indicator (link mapping presence indicator) field. The TID-to-link mapping control field may be used to carry control information related to TID-to-link mapping. For example, the TID-to-link mapping control field is described as follows: The direction field may indicate whether a direction of traffic is uplink, downlink, or uplink and downlink; the default link mapping field may indicate whether a default mapping manner is used; the mapping switch time present field may indicate whether the mapping switch time field is present; the expected duration present field indicates whether the expected duration field is present; and the link mapping presence indicator field indicates which field is present and which field is not present in the eight fields: the link mapping of TID 0 field to the link mapping of TID 7 field.

It may be understood that, when the default link mapping field indicates that the default mapping manner is used, it indicates that all traffic identifiers may be mapped to each established link by default. In this case, the TID-to-link mapping control field may not include the link mapping presence indicator, and the TID-to-link mapping element may not include the link mapping of TID 0 field to the link mapping of TID 7 field.

It may be understood that the TID-to-link mapping information, the TID-to-link mapping relationship (or referred to as a mapping relationship for short), the TID-to-link mapping, and the like in embodiments of this application may be replaced with each other. A TID-to-link mapping relationship indicated by the TID-to-link mapping element in embodiments of this application may be referred to as a mapping relationship (or mapping information) indicated by the TID-to-link mapping element for short.

### 2. TU boundary

In embodiments of this application, a TU boundary is a time point at which the least significant 10 bits of a TSF timer are 0.

Based on the foregoing descriptions, it can be learned that the current AP MLD may indicate, by using the mapping switch time field in the TID-to-link mapping element carried in the beacon frame or the probe response frame, the effective start time of the TID-to-link mapping, where the indicated effective start time of the TID-to-link mapping may be a TBTT indicated by a DTIM beacon frame of any link. It may be understood that a TBTT of a link (for example, a link 1) is a TU boundary of the link, but is not necessarily a TU boundary of another link (for example, a link 2 or a link 3) (this is because values of TSF timers of different links are independently selected, and when the least significant 10 bits of a TSF timer of the link (for example, the link 1) are 0, the least significant 10 bits of a TSF timer of another link are not necessarily 0). However, time precision that can be indicated by a mapping switch time field in a TID-to-link mapping element is TU. As a result, a mapping switch time field in a TID-to-link mapping element on one link cannot indicate a TU boundary of another link, and cannot indicate a TBTT of the another link. In other words, the AP MLD cannot accurately indicate the effective start time of the TID-to-link mapping. This is unfavorable to reliable communication between the AP MLD and a non-AP MLD.

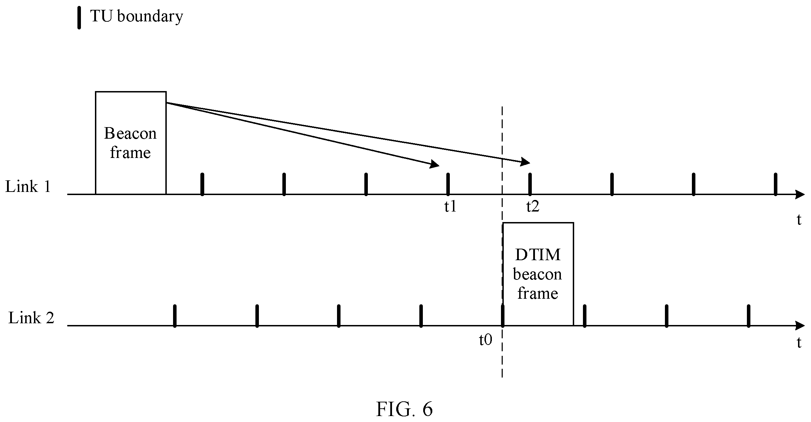

For example, refer to FIG. 6. FIG. 6 is a diagram of a scenario in which the mapping switch time field in the beacon frame indicates the effective start time of the TID-to-link mapping. As shown in FIG. 6, if the AP MLD considers that the effective start time of the TID-to-link mapping is a TBTT corresponding to the DTIM beacon frame of the link 2, that is, a time point t0, however, if the AP MLD sends the beacon frame on the link 1, the mapping switch time field in the TID-to-link mapping element in the beacon frame sent by the AP MLD on the link 1 can only indicate the TU boundary of the link 1, for example, a time point t1 (or a time point t2) in FIG. 6. In this case, the non-AP MLD considers that the effective start time of the TID-to-link mapping is t1 (or t2) that has a specific deviation from the time point t0. It may be understood that, when a deviation occurs, the AP MLD and the non-AP MLD have inconsistent understandings of the effective start time of the TID-to-link mapping. As a result, reliable communication cannot be performed between the AP MLD and the non-AP MLD. For example, it is assumed that the TID-to-link mapping indicates a link (for example, the link 3) is to be disabled, and the effective start time considered by the non-AP MLD is later than the effective start time considered by the AP MLD. The following occurs: If the AP MLD has disabled the link 3 but the non-AP MLD has not disabled the link 3, the non-AP MLD may continue to send data or information to the AP MLD. However, the AP MLD cannot reply with an acknowledgment frame at this time. As a result, reliability of communication is low. For another example, it is assumed that the TID-to-link mapping indicates the link 3 to be enabled, and the effective start time considered by the non-AP MLD is later than the effective start time considered by the AP MLD. The following occurs: The AP MLD has enabled the link 3, but the non-AP MLD has not enabled the link 3. When the AP MLD initiates transmission to the non-AP MLD before the non-AP MLD has enabled the link 3, the non-AP MLD cannot normally receive data or information sent by the AP MLD. As a result, reliability of communication is low.

In view of this, it is proposed in the conventional technology that an offset (offset) field may be added to the TID-to-link mapping element, to indicate a deviation value. For example, the scenario shown in FIG. 6 is used as an example. Based on the solution in the conventional technology, an indicated deviation value may be (t0 - t1) (or an indicated deviation value may be (t0 - t2)). Therefore, when a non-AP MLD receives a TID-to-link mapping element in a beacon frame, with reference to t1 (or t2) indicated by a mapping switch time field in the TID-to-link mapping element and the deviation value (t0 - t1) (or the deviation value (t0 - t2)) indicated by the offset field, it may be determined that an actual effective start time is t0, that is, the non-AP MLD considers that the effective start time of the TID-to-link mapping is t0. Although this manner in the conventional technology can ensure that an AP MLD and the non-AP MLD have consistent understanding of the effective start time of the TID-to-link mapping, the manner of adding a new field in the conventional technology increases signaling overheads. Therefore, this application provides another method. This method can resolve the problem that the AP MLD and the non-AP MLD have inconsistent understandings of the effective start time of the TID-to-link mapping without adding a new field, and helps improve reliability of communication between the AP MLD and the non-AP MLD.

It should be noted that, in the following embodiments of this application, "an effective start time of TID-to-link mapping" may also be briefly described as "an effective start time", and "a target effective start time of the TID-to-link mapping" may also be briefly described as "a target effective start time".

The following describes in detail a communication method and communication apparatuses provided in this application.

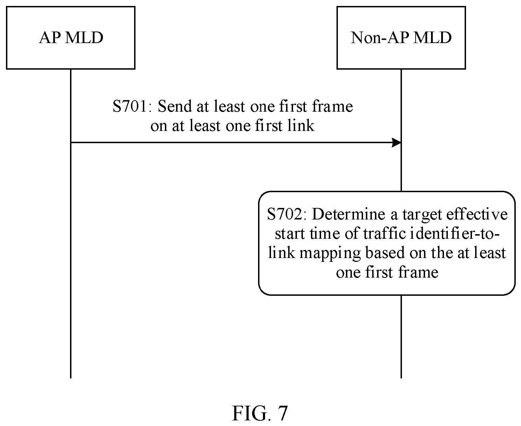

FIG. 7 is a schematic flowchart of the communication method according to an embodiment of this application. As shown in FIG. 7, the communication method includes the following steps S701 and S702. The method shown in FIG. 7 may be performed by an AP MLD and a non-AP MLD, or the method shown in FIG. 7 may be performed by a chip in an AP MLD and a chip in a non-AP MLD. For ease of description, FIG. 7 is mainly described by using an example in which the method is performed by the AP MLD and the non-AP MLD. It should be noted that FIG. 7 is a schematic flowchart of a method embodiment of this application, and shows detailed communication steps or operations of the method. However, these steps or operations are merely examples. Other operations or variations of the operations in FIG. 7 may be further performed in embodiments of this application. In addition, the steps in FIG. 7 may be separately performed in an order different from that presented in FIG. 7, and not all the operations in FIG. 7 may be performed. Specifically:

S701: The AP MLD may send at least one first frame on at least one first link. Correspondingly, the non-AP MLD may receive the at least one first frame on the at least one first link.

For example, before sending the at least one first frame on the at least one first link, the AP MLD may further generate the at least one first frame. Therefore, the AP MLD may send one of the at least one first frame respectively on each of the at least one first link, that is, for the generated at least one first frame, each of the at least one first frame may be sent respectively on one first link. Optionally, the at least one first link may include a third link.

The first frame may indicate an effective start time of traffic identifier-to-link mapping, and the at least one first frame may indicate at least one effective start time. For example, effective start times, indicated by different first frames, of the TID-to-link mapping may be different. That the effective start times are different herein may be understood as that the effective start times are completely different or partially different. This is not limited in this application. For example, it is assumed that there are three first links: a link 1-1, a link 1-2, and a link 1-3. A first frame 1 is sent on the link 1-1, a first frame 2 is sent on the link 1-2, and a first frame 3 is sent on the link 1-3. The first frame 1 indicates an effective start time 1, the first frame 2 indicates an effective start time 2, and the first frame 3 indicates an effective start time 3. The effective start time 1, the effective start time 2, and the effective start time 3 may be different from each other (or mutually different/completely different). In other words, the effective start time 1 ≠ the effective start time 2 ≠ the effective start time 3. Optionally, the effective start time 1, the effective start time 2, and the effective start time 3 may be partially the same, or partially different. For example, the effective start time 1 = the effective start time 2 ≠ the effective start time 3.

The first frame may be specifically a beacon frame, a probe response frame, or the like. This is not limited in this application. The effective start time of the TID-to-link mapping may be specifically indicated by a mapping switch time field in the first frame. Optionally, the mapping switch time field may be carried in a TID-to-link mapping element included in the first frame.

S702: The non-AP MLD determines a target effective start time of the TID-to-link mapping based on the at least one first frame.

In some feasible implementations, that the non-AP MLD determines a target effective start time of the TID-to-link mapping based on the at least one first frame may be understood as follows: The non-AP MLD may determine, from the at least one effective start time indicated by the at least one first frame, one effective start time as the target effective start time of the TID-to-link mapping.

In an implementation 1, the non-AP MLD may randomly select one effective start time from the at least one effective start time indicated by the received at least one first frame as the target effective start time of the TID-to-link mapping. Alternatively, the target effective start time selected by the non-AP MLD is any one of the at least one effective start time indicated by the received at least one first frame.

In an implementation 2, the non-AP MLD may select a largest effective start time from the at least one effective start time indicated by the received at least one first frame as the target effective start time of the TID-to-link mapping. In other words, the target effective start time of the TID-to-link mapping is the largest effective start time in the obtained at least one effective start time.

In an implementation 3, the non-AP MLD may select a smallest effective start time from the at least one effective start time indicated by the received at least one first frame as the target effective start time of the TID-to-link mapping. In other words, the target effective start time of the TID-to-link mapping is the smallest effective start time in the obtained at least one effective start time.

The following describes in detail a processing rule proposed in this embodiment of this application, to resolve a problem that the AP MLD and the non-AP MLD have inconsistent understandings of the effective start time of the TID-to-link mapping. A general idea of the processing rule is as follows: The AP MLD determines a time period [Ta, Tb], and ensures that an effective time selected by any non-AP MLD falls within the time period, where the time point Ta is earlier than the time point Tb. For ease of description, in the following embodiments of this application, the time point Ta is referred to as Ta for short, and the time point Tb is referred to as Tb for short. Specifically, one or more of the following rules are included:
Rule 1: When the TID-to-link mapping in the first frame indicates a link (for ease of description, a second link is used as an example for illustrative description in this application) to be disabled (disabled), the AP MLD disables the second link not earlier than Tb.
Rule 2: When the TID-to-link mapping in the first frame indicates a second link to be enabled (enabled), the AP MLD enables the second link not later than Ta.
Rule 3: When the TID-to-link mapping in the first frame indicates the second link to be disabled, the AP MLD does not initiate transmission to a first non-AP MLD on the second link later than Ta.
Rule 4: When the TID-to-link mapping in the first frame indicates the second link to be enabled, the AP MLD does not initiate transmission to a first non-AP MLD on the second link earlier than Tb.
Rule 5: When the TID-to-link mapping in the first frame indicates the second link to be disabled, end transmission with the first non-AP MLD on the second link earlier than Ta (that is, when the TID-to-link mapping in the first frame indicates the second link to be disabled, the AP MLD ends transmission with the first non-AP MLD on the second link before Ta).
Rule 6: When the TID-to-link mapping in the first frame indicates the second link to be enabled, initiate transmission to the first non-AP MLD on the second link only later than Tb (that is, when the TID-to-link mapping in the first frame indicates the second link to be enabled, the AP MLD is capable of initiating transmission to the first non-AP MLD on the second link only after Tb).
Rule 7: The AP MLD does not initiate transmission to a first non-AP MLD on the second link later than Ta and earlier than Tb.

It may be understood that, if no traffic identifier (TID) is mapped to a link in any direction (including uplink and downlink) according to an indication of the TID-to-link mapping, the link is to be disabled; or if a traffic identifier (TID) is mapped to a link in any direction (including uplink and downlink) according to an indication of the TID-to-link mapping, the link is to be enabled.

It should be noted that "not earlier than" in this embodiment of this application may also be replaced with descriptions such as "later than", "greater than", or "greater than or equal to". Correspondingly, "not later than" may also be replaced with descriptions such as "earlier than", "less than", or "less than or equal to". This is not limited in this application.

It should be noted that Ta and/or Tb may be determined based on a first time and/or a second time. The first time is a TBTT corresponding to a DTIM beacon frame of the third link. In other words, the effective time of the TID-to-link mapping uses the TBTT corresponding to the DTIM beacon frame of the third link as a reference. In other words, the first time in this embodiment of this application may be understood as a reference time. Optionally, the DTIM beacon frame of the third link may be alternatively another non-DTIM beacon frame of the third link. This is not limited herein. For ease of understanding, in this application, an example in which the first time is the TBTT corresponding to the DTIM beacon frame of the third link is mainly used for illustrative description.

It may be understood that when any one of the at least one first link is the third link, an effective start time, indicated by the first frame sent on the any first link, of the TID-to-link mapping is the first time (for example, t0 in FIG. 6); or when any one of the at least one first link is not the third link, an effective start time, indicated by the first frame sent on the any first link, of the TID-to-link mapping is the second time, and the second time is a TU boundary of the any first link. For ease of description, the following mainly uses one first link in the at least one first link as an example to explain and describe a concept of a second time of the one first link in this application.

Optionally, a first understanding for that the second time is a TU boundary of the first link is as follows: The second time is a TU boundary (for example, t1 or t2 in FIG. 6) closest to the first time of the first link.

Optionally, a second understanding for that the second time is a TU boundary of the first link is as follows: The second time may be before the first time, and the second time is a TU boundary (for example, t1 in FIG. 6) closest to the first time of the first link.

Optionally, a third understanding for that the second time is a TU boundary of the first link is as follows: The second time is after the first time, and the second time is a TU boundary (for example, t2 in FIG. 6) closest to the first time of the first link.

The following separately describes values of Ta and Tb in different cases.

It should be noted that the following first time (or second time) corresponding to the first link in this application may be understood as an effective start time indicated by the first frame sent by the AP MLD on the first link.

Case 1: The first non-AP MLD is all non-AP MLDs that establish multi-link communication with the AP MLD. In other words, the "not initiating transmission to the first non-AP MLD on the second link" may be understood as not initiating, on the second link, transmission to any non-AP MLD that establishes multi-link communication with the AP MLD. It should be noted that, in Case 1, the values of Ta and Tb are applicable to all the non-AP MLDs that establish multi-link communication with the AP MLD.

Scenario 1: When the second time is before the first time (that is, the second time is less than the first time) and is the TU boundary closest to the first time of the first link,
a manner 1.1 of setting the values of Ta and Tb is as follows: Ta is determined based on the first time and a length of a TU, and Tb is determined based on the first time. For example, the length of one TU is 1024 µs. For example, Ta is a difference between the first time and the length of the TU (that is, Ta = the first time - 1 TU), and Tb is the first time (that is, Tb = the first time).

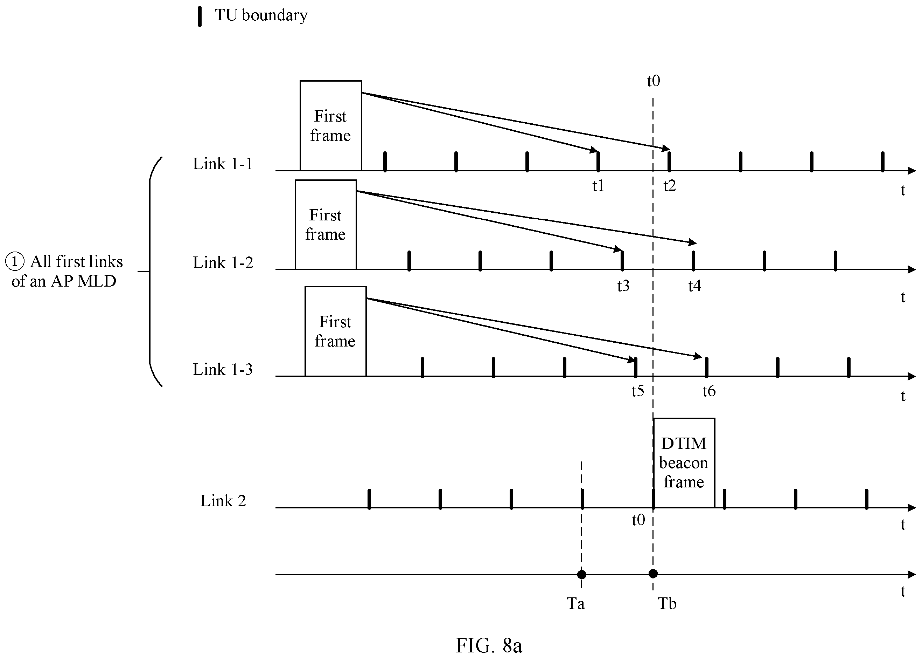

For example, FIG. 8a is a diagram of a scenario for Ta and Tb according to an embodiment of this application. As shown in FIG. 8a, it is assumed that the effective start time of the TID-to-link mapping is a TBTT corresponding to a DTIM beacon frame of a link 2, that is, a time point t0 is used as a reference, that is, the first time is t0. It is assumed that all first links of the AP MLD are a link 1-1, a link 1-2, and a link 1-3 shown in FIG. 8a. In case of Scenario 1, for a first frame sent on the link 1-1, an effective start time, indicated by the first frame, of the TID-to-link mapping is a time point t1, for a first frame sent on the link 1-2, an effective start time, indicated by the first frame, of the TID-to-link mapping is a time point t3, and for a first frame sent on the link 1-3, an effective start time, indicated by the first frame, of the TID-to-link mapping is a time point t5. In other words, the first time is t0, and the second time includes t1, t3, and t5. If Ta = the first time - 1 TU, and Tb = the first time, locations of Ta and Tb are locations of Ta and Tb shown in FIG. 8a.

A manner 1.2 of setting the values of Ta and Tb is as follows: Ta is determined based on a smallest time in all second times corresponding to all first links of the AP MLD, and Tb is determined based on the first time. For example, Ta is the smallest time in all the second times corresponding to all the first links of the AP MLD (that is, Ta = a smallest value in all the second times corresponding to all the first links of the AP MLD), and Tb is the first time (that is, Tb = the first time). Optionally, the first non-AP MLD is all non-AP MLDs that establish multi-link communication with the AP MLD.

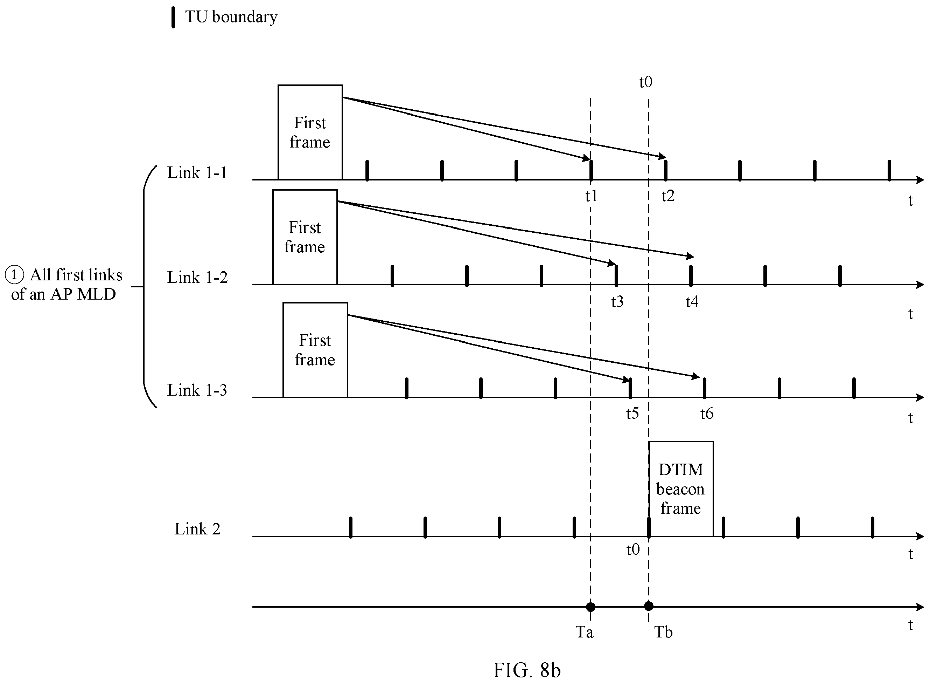

For example, FIG. 8b is a diagram of another scenario for Ta and Tb according to an embodiment of this application. As shown in FIG. 8b, it is assumed that the effective start time of the TID-to-link mapping is a TBTT corresponding to a DTIM beacon frame of a link 2, that is, a time point t0 is used as a reference, that is, the first time is t0. All first links of the AP MLD are a link 1-1, a link 1-2, and a link 1-3 shown by ① in FIG. 8b. In case of Scenario 1, for a first frame sent on the link 1-1, an effective start time, indicated by the first frame, of the TID-to-link mapping is a time point t1, for a first frame sent on the link 1-2, an effective start time, indicated by the first frame, of the TID-to-link mapping is a time point t3, and for a first frame sent on the link 1-3, an effective start time, indicated by the first frame, of the TID-to-link mapping is a time point t5. In other words, the first time is t0, and the second time includes t1, t3, and t5. If Ta = a smallest value in all second times corresponding to all first links of the AP MLD, and Tb = the first time, locations of Ta and Tb are locations of Ta and Tb shown in FIG. 8b, where the smallest value in all the second times corresponding to all the first links of the AP MLD is t1 (because t1 < t3 < t5).

Scenario 2: When the second time is after the first time (that is, the second time is greater than the first time) and is the TU boundary closest to the first time of the first link,
a manner 2.1 of setting the values of Ta and Tb is as follows: Ta is determined based on the first time, and Tb is determined based on the first time and a length of a TU. For example, Ta is the first time (that is, Ta = the first time), and Tb is a sum of the first time and the length of the TU (that is, Tb = the first time + 1 TU).

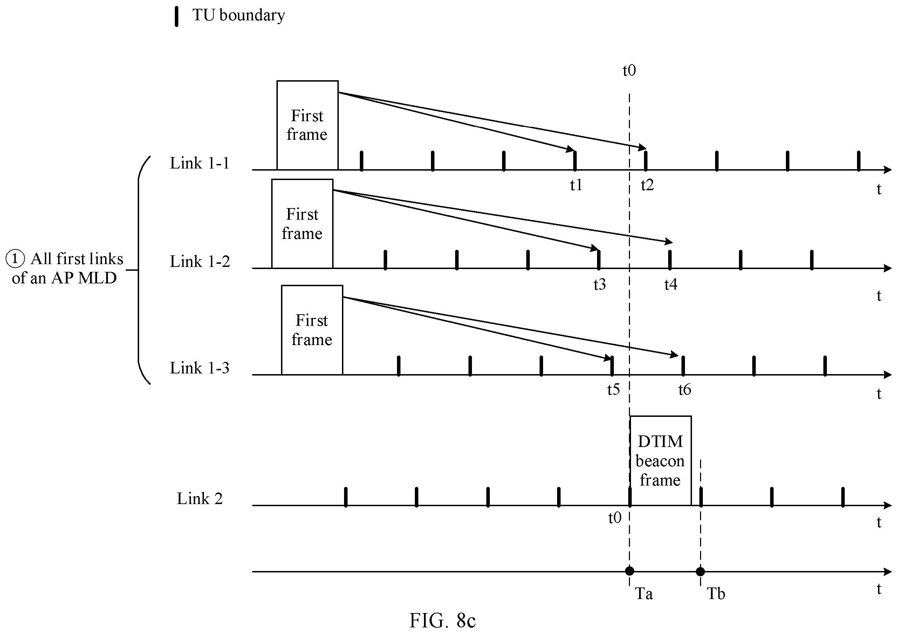

For example, FIG. 8c is a diagram of still another scenario for Ta and Tb according to an embodiment of this application. As shown in FIG. 8c, it is assumed that the effective start time of the TID-to-link mapping is a TBTT corresponding to a DTIM beacon frame of a link 2, that is, a time point t0 is used as a reference, that is, the first time is t0. All first links of the AP MLD are a link 1-1, a link 1-2, and a link 1-3 shown in FIG. 8c. In case of Scenario 2, for a first frame sent on the link 1-1, an effective start time, indicated by the first frame, of the TID-to-link mapping is a time point t2, for a first frame sent on the link 1-2, an effective start time, indicated by the first frame, of the TID-to-link mapping is a time point t4, and for a first frame sent on the link 1-3, an effective start time, indicated by the first frame, of the TID-to-link mapping is a time point t6. In other words, the first time is t0, and the second time includes t2, t4, and t6. If Ta = the first time, and Tb = the first time + 1 TU, locations of Ta and Tb are locations of Ta and Tb shown in FIG. 8c.

A manner 2.2 of setting the values of Ta and Tb is as follows: Ta is determined based on the first time, and Tb is determined based on a largest time in all second times corresponding to all first links of the AP MLD. For example, Ta is the first time (that is, Ta = the first time), and Tb is the largest time in all the second times corresponding to all the first links of the AP MLD (that is, Tb = a largest value in all the second times corresponding to all the first links of the AP MLD).

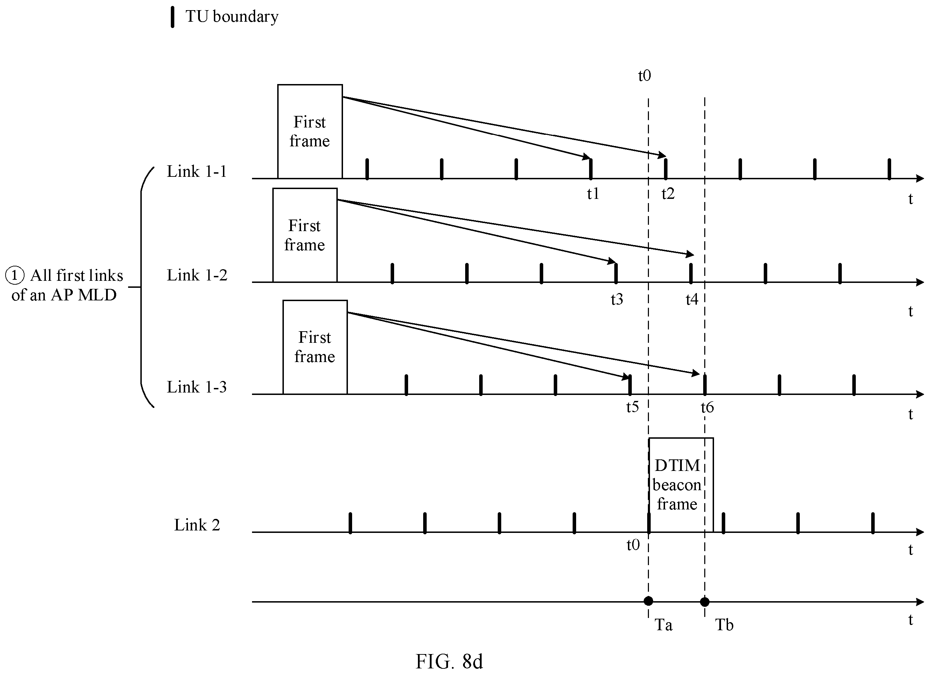

For example, FIG. 8d is a diagram of still another scenario for Ta and Tb according to an embodiment of this application. As shown in FIG. 8d, it is assumed that the effective start time of the TID-to-link mapping is a TBTT corresponding to a DTIM beacon frame of a link 2, that is, a time point t0 is used as a reference, that is, the first time is t0. All first links of the AP MLD are a link 1-1, a link 1-2, and a link 1-3 shown in FIG. 8d. In case of Scenario 2, for a first frame sent on the link 1-1, an effective start time, indicated by the first frame, of the TID-to-link mapping is a time point t2, for a first frame sent on the link 1-2, an effective start time, indicated by the first frame, of the TID-to-link mapping is a time point t4, and for a first frame sent on the link 1-3, an effective start time, indicated by the first frame, of the TID-to-link mapping is a time point t6. In other words, the first time is t0, and the second time includes t2, t4, and t6. If Ta = the first time, and Tb = the first time + 1 TU, locations of Ta and Tb are locations of Ta and Tb shown in FIG. 8d, where the largest value in all the second times corresponding to all the first links of the AP MLD is t6 (because t2 < t4 < t6).

Scenario 3: When the second time is the TU boundary closest to the first time of the first link (that is, the second time may be greater than the first time, or may be less than the first time),
a manner 3.1 of setting the values of Ta and Tb is as follows: Ta is determined based on a smallest time in the first time and/or all second times corresponding to all first links of the AP MLD, and Tb is determined based on a largest time in the first time and/or all the second times corresponding to all the first links of the AP MLD. For example, Ta is the smallest time in the first time and/or all the second times corresponding to all the first links of the AP MLD (that is, Ta = a smallest value in the first time and/or all the second times corresponding to all the first links of the AP MLD), and Tb is the largest time in the first time and/or all the second times corresponding to all the first links of the AP MLD (that is, Tb = a largest value in the first time and/or all the second times corresponding to all the first links of the AP MLD).

It should be noted that, in the manner 3.1 of setting the values of Ta and Tb, the foregoing rule 1 may be alternatively described as follows: When the TID-to-link mapping in the first frame indicates a second link to be disabled (disabled), the AP MLD disables the second link not earlier than any one of the first time and/or all the second times corresponding to all the first links of the AP MLD.

Optionally, in the manner 3.1 of setting the values of Ta and Tb, the foregoing rule 2 may be alternatively described as follows: When the TID-to-link mapping in the first frame indicates a second link to be enabled (enabled), the AP MLD enables the second link not later than any one of the first time and/or all the second times corresponding to all the first links of the AP MLD.

Optionally, in the manner 3.1 of setting the values of Ta and Tb, the foregoing rule 3 may be alternatively described as follows: When the TID-to-link mapping in the first frame indicates the second link to be disabled, the AP MLD does not initiate transmission to a first non-AP MLD on the second link after any one of the first time and/or all the second times corresponding to all the first links of the AP MLD.

Optionally, in the manner 3.1 of setting the values of Ta and Tb, the foregoing rule 4 may be alternatively described as follows: When the TID-to-link mapping in the first frame indicates the second link to be enabled, the AP MLD does not initiate transmission to a first non-AP MLD on the second link before any one of the first time and/or all the second times corresponding to all the first links of the AP MLD.

Optionally, in the manner 3.1 of setting the values of Ta and Tb, the foregoing rule 5 may be alternatively described as follows: When the TID-to-link mapping in the first frame indicates the second link to be disabled, the AP MLD ends transmission with the first non-AP MLD on the second link before any one of the first time and/or all the second times corresponding to all the first links of the AP MLD.

Optionally, in the manner 3.1 of setting the values of Ta and Tb, the foregoing rule 6 may be alternatively described as follows: When the TID-to-link mapping in the first frame indicates the second link to be enabled, the AP MLD is capable of initiating transmission to the first non-AP MLD on the second link only after any one of the first time and/or all the second times corresponding to all the first links of the AP MLD.

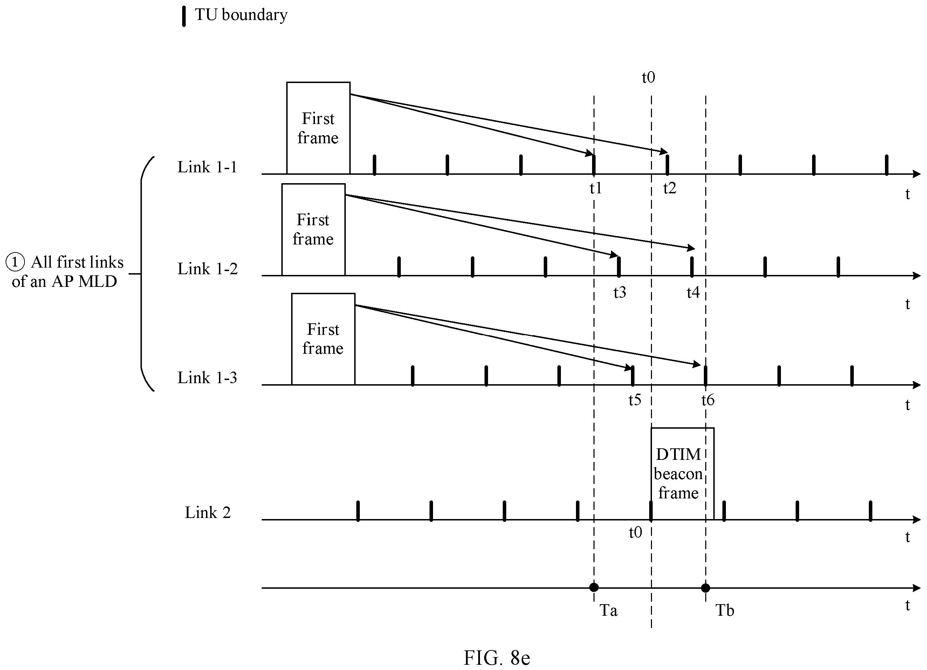

For example, FIG. 8e is a diagram of still another scenario for Ta and Tb according to an embodiment of this application. As shown in FIG. 8e, it is assumed that the effective start time of the TID-to-link mapping is a TBTT corresponding to a DTIM beacon frame of a link 2, that is, a time point t0 is used as a reference, that is, the first time is t0. All first links of the AP MLD are a link 1-1, a link 1-2, and a link 1-3 shown in FIG. 8e. In case of Scenario 3, for a first frame sent on the link 1-1, an effective start time, indicated by the first frame, of the TID-to-link mapping is a time point t1 or t2, for a first frame sent on the link 1-2, an effective start time, indicated by the first frame, of the TID-to-link mapping is a time point t3 or t4, and for a first frame sent on the link 1-3, an effective start time, indicated by the first frame, of the TID-to-link mapping is a time point t5 or t6. In other words, the first time is t0, and the second time includes either of t1 and t2, either of t3 and t4, and either of t5 and t6. Herein, that the second time includes t1, t3, and t6 is used as an example. If Ta = the smallest value in all the second times corresponding to all the first links of the AP MLD, and Tb = the largest value in all the second times corresponding to all the first links of the AP MLD, locations of Ta and Tb are locations of Ta and Tb shown in FIG. 8e, where the smallest value in all the second times corresponding to all the first links of the AP MLD is t1 (because t1 < t3 < t6), and the largest value in all the second times corresponding to all the first links of the AP MLD is t6 (because t1 < t3 < t6).

It may be understood that in the scenario 1 to the scenario 3 in the foregoing case 1, an implementation in which all the non-AP MLDs that establish multi-link communication with the AP select target effective start times of the TID-to-link mapping may not be limited (for example, the non-AP MLD may use any one of the foregoing implementations 1 to 3), that is, which effective start time is specifically selected by the non-AP MLD from the at least one effective start time as the target effective start time may not be limited. For example, the target effective start time may be any effective start time in the at least one effective start time, or the target effective start time may be a largest effective start time in the at least one effective start time, or the target effective start time may be a smallest effective start time in the at least one effective start time, or the like.

Case 2: The first non-AP MLD is one of the non-AP MLDs that establish multi-link communication with the AP MLD. In other words, the "not initiating transmission to the first non-AP MLD on the second link" may be understood as not initiating, on the second link, transmission to one of the non-AP MLDs that establish multi-link communication with the AP MLD. It should be noted that, in Case 2, the values of Ta and Tb are specific to one non-AP MLD that establishes multi-link communication with the AP MLD, that is, the AP MLD may separately determine a time range [Ta, Tb] for each non-AP MLD that establishes multi-link communication with the AP MLD, or for each non-AP MLD that establishes multi-link communication with the AP MLD, the AP MLD needs to separately determine the values of Ta and Tb corresponding to the non-AP MLD.

Scenario I: When the second time is before the first time (that is, the second time is less than the first time) and is the TU boundary closest to the first time of the first link,
a manner I.1 of setting the values of Ta and Tb is as follows: Ta is determined based on a smallest time in all second times corresponding to all first links established between the first non-AP MLD and the AP MLD, and Tb is determined based on the first time. For example, Ta is the smallest time in all the second times corresponding to all the first links established between the first non-AP MLD and the AP MLD (that is, Ta = a smallest value in all the second times corresponding to all the first links established between the first non-AP MLD and the AP MLD), and Tb is the first time (that is, Tb = the first time).

It may be understood that, in the scenario I of the case 2, an implementation (for example, any one of the foregoing implementations 1 to 3) in which the non-AP MLD selects the target effective start time of the TID-to-link mapping may not be limited, that is, which effective start time is specifically selected by the non-AP MLD from the at least one effective start time as the target effective start time is not limited. For example, the target effective start time may be any effective start time in the at least one effective start time, or the target effective start time may be a largest effective start time in the at least one effective start time, or the target effective start time may be a smallest effective start time in the at least one effective start time, or the like. This is not limited herein.

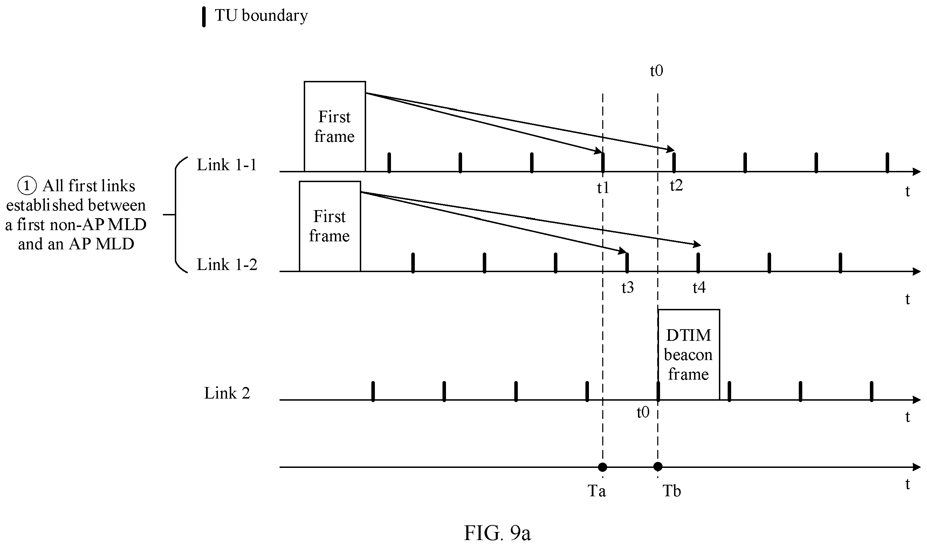

For example, FIG. 9a is a diagram of still another scenario for Ta and Tb according to an embodiment of this application. As shown in FIG. 9a, it is assumed that the effective start time of the TID-to-link mapping is a TBTT corresponding to a DTIM beacon frame of a link 2, that is, a time point t0 is used as a reference, that is, the first time is t0. All first links established between the first non-AP MLD and the AP MLD are a link 1-1 and a link 1-2 shown in FIG. 9a. In case of Scenario I, for a first frame sent on the link 1-1, an effective start time, indicated by the first frame, of the TID-to-link mapping is a time point t1, and for a first frame sent on the link 1-2, an effective start time, indicated by the first frame, of the TID-to-link mapping is a time point t3. In other words, the first time is t0, and the second time includes t1 and t3. Which one of the at least one effective start time indicated by the received first frame is the target effective time determined by the non-AP MLD is not limited. If Ta = the smallest value in all the second times corresponding to all the first links established between the first non-AP MLD and the AP MLD, and Tb = the first time, locations of Ta and Tb are locations of Ta and Tb shown in FIG. 9a, where the smallest value in all the second times corresponding to all the first links established between the first non-AP MLD and the AP MLD is t1 (because t1 < t3).

Scenario II: When the second time is after the first time (that is, the second time is greater than the first time) and is the TU boundary closest to the first time of the first link,
a manner II.3 of setting the values of Ta and Tb is as follows: Ta is determined based on the first time, and Tb is determined based on a largest time in all second times corresponding to all first links established between the first non-AP MLD and the AP MLD. For example, Ta is the first time (that is, Ta = the first time), and Tb is the largest time in all the second times corresponding to all the first links established between the first non-AP MLD and the AP MLD (that is, Tb = a largest value in all the second times corresponding to all the first links established between the first non-AP MLD and the AP MLD).

It may be understood that, in the scenario II of the case 2, an implementation (for example, any one of the foregoing implementations 1 to 3) in which the non-AP MLD selects the target effective start time of the TID-to-link mapping may not be limited, that is, which effective start time is specifically selected by the non-AP MLD from the at least one effective start time as the target effective start time is not limited. For example, the target effective start time may be any effective start time in the at least one effective start time, or the target effective start time may be a largest effective start time in the at least one effective start time, or the target effective start time may be a smallest effective start time in the at least one effective start time, or the like. This is not limited herein.

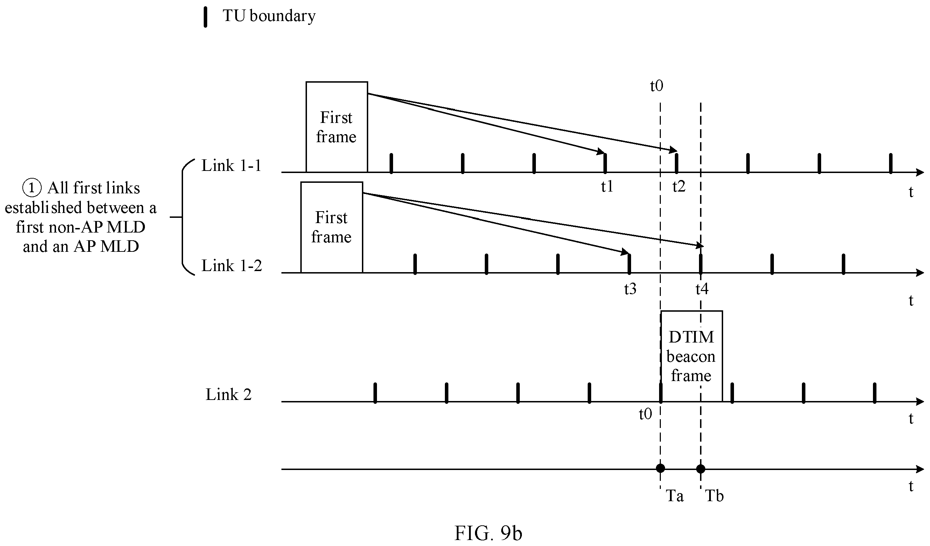

For example, FIG. 9b is a diagram of still another scenario for Ta and Tb according to an embodiment of this application. As shown in FIG. 9b, it is assumed that the effective start time of the TID-to-link mapping is a TBTT corresponding to a DTIM beacon frame of a link 2, that is, a time point t0 is used as a reference, that is, the first time is t0. All first links established between the first non-AP MLD and the AP MLD are a link 1-1 and a link 1-2 shown in FIG. 9b. In case of Scenario II, for a first frame sent on the link 1-1, an effective start time, indicated by the first frame, of the TID-to-link mapping is a time point t2, and for a first frame sent on the link 1-2, an effective start time, indicated by the first frame, of the TID-to-link mapping is a time point t4. In other words, the first time is t0, and the second time includes t2 and t4. Which one of the at least one effective start time indicated by the received first frame is the target effective time determined by the non-AP MLD is not limited. If Ta = the first time, and Tb = the largest value in all the second times corresponding to all the first links established between the first non-AP MLD and the AP MLD, locations of Ta and Tb are locations of Ta and Tb shown in FIG. 9b, where the largest value in all the second times corresponding to all the first links established between the first non-AP MLD and the AP MLD is t4 (because t2 < t4).

Scenario III: When the second time is the TU boundary closest to the first time of the first link (that is, the second time may be greater than the first time, or may be less than the first time), and the non-AP MLD determines, in the foregoing implementation 1, the target effective start time of the TID-to-link mapping,
a manner III.1 of setting the values of Ta and Tb is as follows: Ta is determined based on a smallest time in the first time and/or all second times corresponding to all first links established between the first non-AP MLD and the AP MLD, and Tb is determined based on a largest time in the first time and/or all the second times corresponding to all the first links established between the first non-AP MLD and the AP MLD. For example, Ta is the smallest time in the first time and/or all the second times corresponding to all the first links established between the first non-AP MLD and the AP MLD (that is, Ta = a smallest value in the first time and/or all the second times corresponding to all the first links established between the first non-AP MLD and the AP MLD), and Tb is the largest time in the first time and/or all the second times corresponding to all the first links established between the first non-AP MLD and the AP MLD (that is, Tb = a largest value in the first time and/or all the second times corresponding to all the first links established between the first non-AP MLD and the AP MLD).

It may be understood that, in the scenario III of the case 2, an implementation (for example, any one of the foregoing implementations 1 to 3) in which the non-AP MLD selects the target effective start time of the TID-to-link mapping may not be limited, that is, which effective start time is specifically selected by the non-AP MLD from the at least one effective start time as the target effective start time is not limited. For example, the target effective start time may be any effective start time in the at least one effective start time, or the target effective start time may be a largest effective start time in the at least one effective start time, or the target effective start time may be a smallest effective start time in the at least one effective start time, or the like. This is not limited herein.

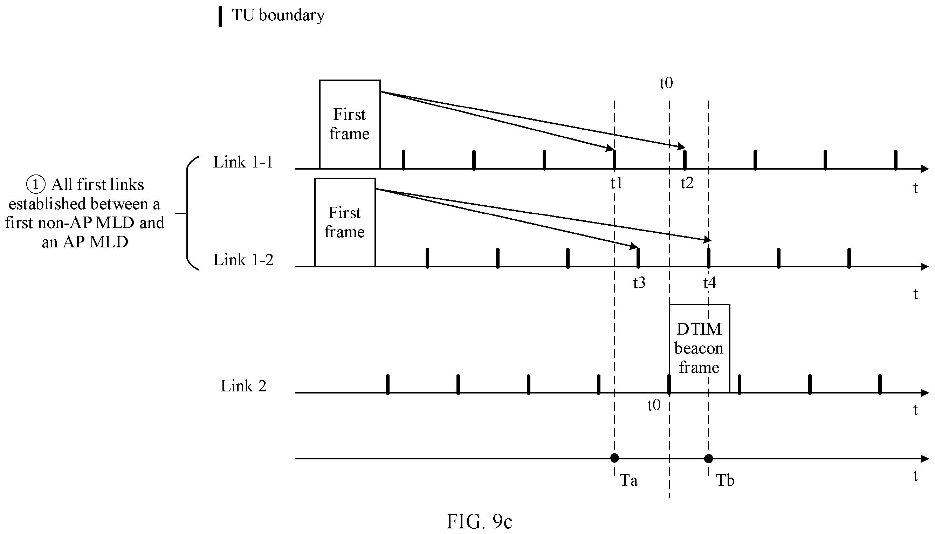

For example, FIG. 9c is a diagram of still another scenario for Ta and Tb according to an embodiment of this application. As shown in FIG. 9c, it is assumed that the effective start time of the TID-to-link mapping is a TBTT corresponding to a DTIM beacon frame of a link 2, that is, a time point t0 is used as a reference, that is, the first time is t0. All first links established between the first non-AP MLD and the AP MLD are a link 1-1 and a link 1-2 shown in FIG. 9c. In case of Scenario III, for a first frame sent on the link 1-1, an effective start time, indicated by the first frame, of the TID-to-link mapping is a time point t1 or t2, and for a first frame sent on the link 1-2, an effective start time, indicated by the first frame, of the TID-to-link mapping is a time point t3 or t4. In other words, the first time is t0, and the second time includes either of t1 and t2, and either of t3 and t4. Herein, that the second time includes t1 and t4 is used as an example. Which one of the at least one effective start time indicated by the received first frame is the target effective time determined by the non-AP MLD is not limited. If Ta = the smallest value in all the second times corresponding to all the first links established between the first non-AP MLD and the AP MLD, and Tb = the largest value in all the second times corresponding to all the first links established between the first non-AP MLD and the AP MLD, locations of Ta and Tb are locations of Ta and Tb shown in FIG. 9c, where the smallest value in all the second times corresponding to all the first links established between the first non-AP MLD and the AP MLD is t1 (because t1 < t4), and the largest value in all the second times corresponding to all the first links established between the first non-AP MLD and the AP MLD is t4 (because t1 < t4).

Scenario IV: When the second time is before the first time (that is, the second time is less than the first time) and is the TU boundary closest to the first time of the first link,
a manner IV.1 of setting the values of Ta and Tb is as follows: Ta is determined based on a largest time in the first time and/or all second times corresponding to all first links established between the first non-AP MLD and the AP MLD, and Tb is determined based on the first time. For example, Ta is the largest time in the first time and/or all the second times corresponding to all the first links established between the first non-AP MLD and the AP MLD (that is, Ta = a largest value in the first time and/or all the second times corresponding to all the first links established between the first non-AP MLD and the AP MLD), and Tb is the first time (that is, Tb = the first time).

It may be understood that, in the scenario IV of the case 2, the non-AP MLD may determine, in the foregoing implementation 2, the target effective start time of the TID-to-link mapping, that is, the target effective start time determined by the non-AP MLD is a largest effective start time in the obtained at least one effective start time.

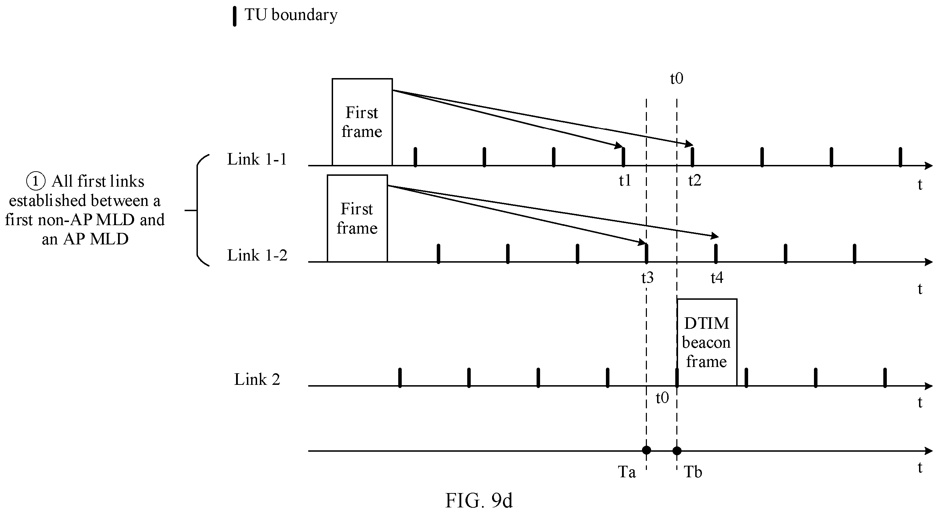

For example, FIG. 9d is a diagram of still another scenario for Ta and Tb according to an embodiment of this application. As shown in FIG. 9d, it is assumed that the effective start time of the TID-to-link mapping is a TBTT corresponding to a DTIM beacon frame of a link 2, that is, a time point t0 is used as a reference, that is, the first time is t0. All first links established between the first non-AP MLD and the AP MLD are a link 1-1 and a link 1-2 shown in FIG. 9d. In case of Scenario IV, for a first frame sent on the link 1-1, an effective start time, indicated by the first frame, of the TID-to-link mapping is a time point t1, and for a first frame sent on the link 1-2, an effective start time, indicated by the first frame, of the TID-to-link mapping is a time point t3. In other words, the first time is t0, and the second time includes t1 and t3. If the target effective time determined by the non-AP MLD is the largest effective time (namely, t3) in the at least one effective start time (t1 and t3 shown in FIG. 9d) indicated by the received first frame, and if Ta = the largest value in all the second times corresponding to all the first links established between the first non-AP MLD and the AP MLD, and Tb = the first time, locations of Ta and Tb are locations of Ta and Tb shown in FIG. 9d, where the largest value in all the second times corresponding to all the first links established between the first non-AP MLD and the AP MLD is t3 (because t1 < t3).

Scenario V: When the second time is after the first time (that is, the second time is greater than the first time) and is the TU boundary closest to the first time of the first link,
a manner V.1 of setting the values of Ta and Tb is as follows: Ta is determined based on the first time, and Tb is determined based on a smallest time in the first time and/or all second times corresponding to all first links established between the first non-AP MLD and the AP MLD. For example, Ta is the first time (that is, Ta = the first time), and Tb is the smallest time in the first time and/or all the second times corresponding to all the first links established between the first non-AP MLD and the AP MLD (that is, Tb = a smallest value in all the second times and/or the first time).

It may be understood that, in the scenario V of the case 2, the non-AP MLD may determine, in the foregoing implementation 3, the target effective start time of the TID-to-link mapping, that is, the target effective start time determined by the non-AP MLD is a smallest effective start time in the obtained at least one effective start time.

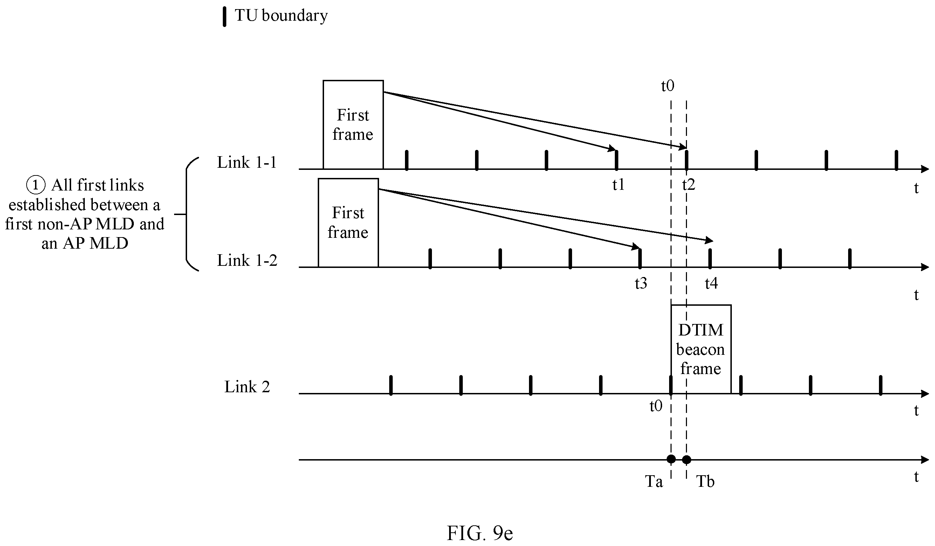

For example, FIG. 9e is a diagram of still another scenario for Ta and Tb according to an embodiment of this application. As shown in FIG. 9e, it is assumed that the effective start time of the TID-to-link mapping is a TBTT corresponding to a DTIM beacon frame of a link 2, that is, a time point t0 is used as a reference, that is, the first time is t0. All first links established between the first non-AP MLD and the AP MLD are a link 1-1 and a link 1-2 shown in FIG. 9e. In case of Scenario V, for a first frame sent on the link 1-1, an effective start time, indicated by the first frame, of the TID-to-link mapping is a time point t2, and for a first frame sent on the link 1-2, an effective start time, indicated by the first frame, of the TID-to-link mapping is a time point t4. In other words, the first time is t0, and the second time includes t2 and t4. If the target effective time determined by the non-AP MLD is the smallest effective time (namely, t2) in the at least one effective start time (t2 and t4 shown in FIG. 9e) indicated by the received first frame, and if Ta = the first time, and Tb = the smallest value in all the second times corresponding to all the first links established between the first non-AP MLD and the AP MLD, locations of Ta and Tb are locations of Ta and Tb shown in FIG. 9e, where the smallest value in all the second times corresponding to all the first links established between the first non-AP MLD and the AP MLD is t2 (because t2 < t4).

It may be understood that, to further distinguish meanings of "all first links of the AP MLD" and "all first links established between the first non-AP MLD and the AP MLD" described in this embodiment of this application, the following provides descriptions with reference to a specific example. For example, it is assumed that the AP MLD operates on N first links, and M first links are established between the first non-AP MLD and the AP MLD, all first links of the AP MLD may be understood as the N first links, all first links established between the first non-AP MLD and the AP MLD may be understood as the M first links, where N is a positive integer greater than or equal to M.

In this application, if a link (for example, the second link is used as an example for illustrative description in this application) is to be disabled, the AP MLD is disabled the latest (that is, later than disabling times of all non-AP MLDs that establish multi-link communication with the AP MLD). If a link (for example, the second link is used as an example for illustrative description in this application) is to be enabled, the AP MLD is enabled the earliest (that is, earlier than enabling times of all non-AP MLDs that establish multi-link communication with the AP MLD). This can resolve a problem that the AP MLD and the non-AP MLD cannot reliably communicate with each other when the AP MLD and the non-AP MLD have inconsistent understandings of the mapping effective time.

The foregoing describes in detail the method in this application. To better implement the foregoing solutions in embodiments of this application, embodiments of this application further provide a corresponding apparatus or device.

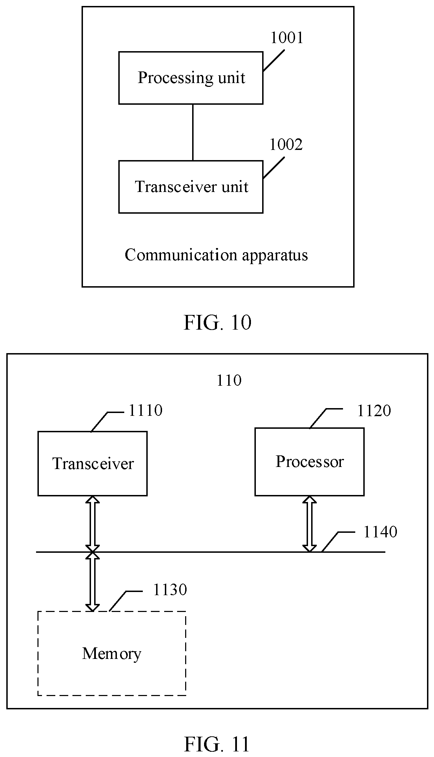

In this application, a communication apparatus is divided into functional modules based on the foregoing method embodiment. For example, the communication apparatus may be divided into functional modules corresponding to functions, or two or more functions may be integrated into one processing module. The integrated module may be implemented in a form of hardware, or may be implemented in a form of a software functional module. It should be noted that, in this application, module division is an example, and is merely logical function division. During actual implementation, another division manner may be used. The following describes in detail communication apparatuses in embodiments of this application with reference to FIG. 10 to FIG. 12.

FIG. 10 is a diagram of a structure of a communication apparatus according to an embodiment of this application. As shown in FIG. 10, the communication apparatus includes a processing unit 1001 and a transceiver unit 1002. The transceiver unit 1002 may implement a corresponding communication function, and the processing unit 1001 is configured to process data. For example, the transceiver unit 1002 may also be referred to as a communication interface, a communication unit, or the like.

In some embodiments of this application, the communication apparatus may be configured to perform an action performed by the AP MLD in the foregoing method embodiment. In this case, the communication apparatus may be the AP MLD or a component (such as a chip or a system) that may be configured in the AP MLD. The transceiver unit 1002 is configured to perform operations related to receiving and sending of the AP MLD in the foregoing method embodiment. The processing unit 1001 is configured to perform operations related to processing of the AP MLD in the foregoing method embodiment.

In some embodiments of this application, the communication apparatus may be the AP MLD shown above or a chip, and the chip may be disposed in the AP MLD. In other words, the communication apparatus may be configured to perform steps, functions, or the like performed by the AP MLD in the foregoing method embodiment.

The processing unit 1001 is configured to generate at least one first frame. The transceiver unit 1002 is configured to send the at least one first frame on at least one first link.

Optionally, the communication apparatus may further include a storage unit. The storage unit may be configured to store instructions and/or data. The processing unit 1001 may read the instructions and/or the data in the storage unit, so that the communication apparatus implements the foregoing method embodiment.

In some other embodiments of this application, the communication apparatus may be configured to perform an action performed by the non-AP MLD in the foregoing method embodiment. In this case, the communication apparatus may be the non-AP MLD or a component that may be configured in the non-AP MLD. The transceiver unit 1002 is configured to perform operations related to receiving and sending of the non-AP MLD in the foregoing method embodiment. The processing unit 1001 is configured to perform operations related to processing of the non-AP MLD in the foregoing method embodiment. In other words, the communication apparatus may be configured to perform steps, functions, or the like performed by the non-AP MLD in the foregoing method embodiment.

The transceiver unit 1002 is configured to receive at least one first frame on at least one first link. The processing unit 1001 is configured to determine a target effective start time of traffic identifier-to-link mapping based on the at least one first frame.

It may be understood that for specific descriptions of parsing the first frame by the processing unit 1001 to determine the target effective start time, refer to the method embodiment shown above. Details are not described herein again.

Optionally, the communication apparatus may further include a storage unit. The storage unit may be configured to store instructions and/or data. The processing unit 1001 may read the instructions and/or the data in the storage unit, so that the communication apparatus implements the foregoing method embodiment.

It may be understood that specific descriptions of the transceiver unit and the processing unit described in this embodiment of this application are merely examples. For specific functions, performed steps, or the like of the transceiver unit and the processing unit, refer to the foregoing method embodiment. Details are not described herein again.

In the foregoing embodiments, for descriptions of the first frame, a first time, a second time, Ta, Tb, and the like, refer to the descriptions in the foregoing method embodiment. Details are not described herein again.

The foregoing describes the communication apparatus in this embodiment of this application. The following describes possible product forms of the communication apparatus. It should be understood that a product in any form that has a function of the communication apparatus in FIG. 10 falls within the protection scope of embodiments of this application. It should be further understood that the following descriptions are merely examples, and do not limit a product form of the communication apparatus in embodiments of this application.

In a possible implementation, in the communication apparatus shown in FIG. 10, the processing unit 1001 may be one or more processors, and the transceiver unit 1002 may be a transceiver, or the transceiver unit 1002 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be understood as a process of outputting the foregoing information by the processor. When outputting the foregoing information, the processor outputs the foregoing information to the transceiver, so that the transceiver transmits the information. After the foregoing information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the foregoing information, and inputs the information into the processor. Further, after the transceiver receives the foregoing information, other processing may further need to be performed on the foregoing information before the information is input into the processor.

As shown in FIG. 11, the communication apparatus 110 includes one or more processors 1120 and a transceiver 1110.

In some embodiments of this application, the communication apparatus may be configured to perform steps, functions, or the like performed by the AP MLD in the foregoing method embodiment.

The processor 1120 is configured to generate at least one first frame. The transceiver 1110 is configured to send the at least one first frame on at least one first link.

In some other embodiments of this application, the communication apparatus may be configured to perform steps, functions, or the like performed by the non-AP MLD in the foregoing method embodiment.

The transceiver 1110 is configured to receive at least one first frame on at least one first link. The processor 1120 is configured to determine a target effective start time of traffic identifier-to-link mapping based on the at least one first frame.

It may be understood that specific descriptions of the transceiver and the processor shown in this embodiment of this application are merely examples. For specific functions, performed steps, or the like of the transceiver and the processor, refer to the foregoing method embodiment. Details are not described herein again.

In the foregoing embodiments, for descriptions of the first frame, a first time, a second time, Ta, Tb, and the like, refer to the descriptions in the foregoing method embodiment. Details are not described herein again.

In each implementation of a communication apparatus shown in FIG. 11, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 110 may further include one or more memories 1130, configured to store program instructions, data, and/or the like. The memory 1130 is coupled to the processor 1120. A coupling in embodiments of this application may be an indirect coupling or a communication connection between apparatuses, units, or modules in an electrical form, a mechanical form, or another form, and is for information exchange between the apparatuses, the units, or the modules. The processor 1120 may operate in cooperation with the memory 1130. The processor 1120 may execute the program instructions stored in the memory 1130. Optionally, at least one of the one or more memories may be included in the processor.

A specific connection medium between the transceiver 1110, the processor 1120, and the memory 1130 is not limited in embodiments of this application. In this embodiment of this application, the memory 1130, the processor 1120, and the transceiver 1110 are connected through a bus 1140 in FIG. 11. The bus is represented by a bold line in FIG. 11. A manner of connection between other components is merely an example for illustrative description, and is not limited thereto. The bus may be classified into an address bus, a data bus, a control bus, and the like. For ease of representation, only one bold line is used to represent the bus in FIG. 11, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application), but is not limited thereto. The memory in this embodiment of this application may be alternatively a circuit or any other apparatus that can implement a storage function, and is configured to store program instructions and/or data.

For example, the processor 1120 is mainly configured to: process a communication protocol and communication data, control the entire communication apparatus, execute a software program, and process data of the software program. The memory 1130 is mainly configured to store the software program and the data. The transceiver 1110 may include a control circuit and an antenna. The control circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1120 may read the software program from the memory 1130, interpret and execute instructions of the software program, and process data of the software program. When data needs to be sent wirelessly, the processor 1120 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 1120. The processor 1120 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively have more components and the like than those in FIG. 11. This is not limited in embodiments of this application. The method performed by the processor and the transceiver above is merely an example. For specific steps performed by the processor and the transceiver, refer to the method described above.

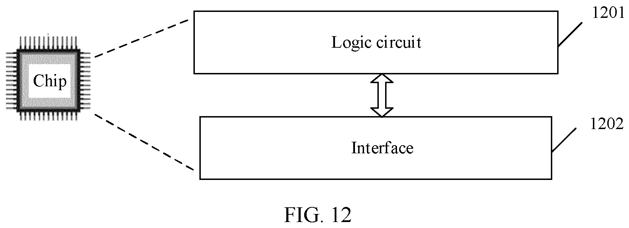

In another possible implementation, in the communication apparatus shown in FIG. 10, the processing unit 1001 may be one or more logic circuits, and the transceiver unit 1002 may be an input/output interface, or may be referred to as a communication interface, an interface circuit, an interface, or the like. Alternatively, the transceiver unit 1002 may be a sending unit and a receiving unit. The sending unit may be an output interface, and the receiving unit may be an input interface. The sending unit and the receiving unit are integrated into one unit, for example, an input/output interface. As shown in FIG. 12, a communication apparatus shown in FIG. 12 includes a logic circuit 1201 and an interface 1202. That is, the foregoing processing unit 1001 may be implemented by using the logic circuit 1201, and the transceiver unit 1002 may be implemented by using the interface 1202. The logic circuit 1201 may be a chip, a processing circuit, an integrated circuit, a system on chip (system on chip, SoC), or the like. The interface 1202 may be a communication interface, an input/output interface, a pin, or the like. For example, FIG. 12 shows an example in which the communication apparatus is a chip, and the chip includes the logic circuit 1201 and the interface 1202.

In this embodiment of this application, the logic circuit and the interface may be coupled to each other. A specific manner of connection between the logic circuit and the interface is not limited in embodiments of this application.

In some embodiments of this application, the communication apparatus may be configured to perform steps, functions, or the like performed by the AP MLD in the foregoing method embodiment.

The logic circuit 1201 is configured to generate at least one first frame. The interface 1202 is configured to send the at least one first frame on at least one first link.

In still some embodiments of this application, the communication apparatus may be configured to perform steps, functions, or the like performed by the non-AP MLD in the foregoing method embodiment.

The interface 1202 is configured to receive at least one first frame on at least one first link. The logic circuit 1201 is configured to determine a target effective start time of traffic identifier-to-link mapping based on the at least one first frame.

It may be understood that specific descriptions of the logic circuit and the interface shown in this embodiment of this application are merely examples. For specific functions, performed steps, or the like of the logic circuit and the interface, refer to the foregoing method embodiment. Details are not described herein again.

In the foregoing embodiments, for descriptions of the first frame, a first time, a second time, Ta, Tb, and the like, refer to the descriptions in the foregoing method embodiment. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

An embodiment of this application further provides a wireless communication system. The wireless communication system includes an AP MLD and a non-AP MLD. The AP MLD and the non-AP MLD may be configured to perform the method in any one of the foregoing embodiments.

In addition, this application further provides a computer program. The computer program is used to implement an operation and/or processing performed by an AP MLD in the method provided in this application.

This application further provides a computer program. The computer program is used to implement an operation and/or processing performed by a non-AP MLD in the method provided in this application.

This application further provides a computer-readable storage medium. The computer-readable storage medium stores computer code. When the computer code is run on a computer, the computer is enabled to perform an operation and/or processing performed by an AP MLD in the method provided in this application.

This application further provides a computer-readable storage medium. The computer-readable storage medium stores computer code. When the computer code is run on a computer, the computer is enabled to perform an operation and/or processing performed by a non-AP MLD in the method provided in this application.

This application further provides a computer program product. The computer program product includes computer code or a computer program. When the computer code or the computer program is run on a computer, an operation and/or processing performed by an AP MLD in the method provided in this application are/is implemented.

This application further provides a computer program product. The computer program product includes computer code or a computer program. When the computer code or the computer program is run on a computer, an operation and/or processing performed by a non-AP MLD in the method provided in this application are/is implemented.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by an access point multi-link device AP MLD, at least one first frame; and
sending, by the AP MLD, the at least one first frame on at least one first link, wherein
the first frame indicates an effective start time of traffic identifier-to-link mapping (TID-to-Link Mapping);
when the TID-to-link mapping indicates a second link to be disabled, the AP MLD disables the second link not earlier than a time point Tb; or
when the TID-to-link mapping indicates the second link to be enabled, the AP MLD enables the second link not later than a time point Ta; and
Ta is earlier than Tb, Tb is determined based on a first time, and the first time is a target beacon transmission time TBTT corresponding to a delivery traffic indication map DTIM beacon frame of a third link.

2. The method according to claim 1, wherein the method comprises:
when the first link is the same as the third link, the effective start time, indicated by the first frame sent on the first link, of the TID-to-link mapping is the first time; or
when the first link is different from the third link, the effective start time, indicated by the first frame sent on the first link, of the TID-to-link mapping is a second time, wherein the second time is a time unit TU boundary of the first link.

3. The method according to claim 1 or 2, wherein
when the TID-to-link mapping indicates the second link to be disabled, the AP MLD does not initiate transmission to a first non-access point multi-link device non-AP MLD on the second link later than Ta; or
when the TID-to-link mapping indicates the second link to be enabled, the AP MLD does not initiate transmission to the first non-AP MLD on the second link earlier than Tb.

4. The method according to any one of claims 1 to 3, wherein
when the TID-to-link mapping indicates the second link to be disabled, the AP MLD ends transmission with the first non-AP MLD on the second link before Ta; or
when the TID-to-link mapping indicates the second link to be enabled, the AP MLD is capable of initiating transmission to the first non-AP MLD on the second link only after Tb; and
the first non-AP MLD is all non-AP MLDs that establish multi-link communication with the AP MLD.

5. The method according to claim 1, wherein
the AP MLD does not initiate transmission to a first non-access point multi-link device non-AP MLD on the second link later than Ta and earlier than Tb.

6. The method according to any one of claims 1 to 5, wherein the second time is a TU boundary closest to the first time of the first link.

7. The method according to any one of claims 1 to 6, wherein the second time is before the first time, and the second time is the TU boundary closest to the first time of the first link.

8. The method according to claim 7, wherein
Ta is a difference between the first time and a length of a TU, Tb is determined based on the first time, and specifically, Tb is the first time; or
Ta is a smallest time in all second times corresponding to all first links of the AP MLD, and Tb is the first time.

9. The method according to claim 7, wherein
Ta is a smallest time in all second times corresponding to all first links established between the first non-AP MLD and the AP MLD, and Tb is the first time.

10. The method according to claim 7, wherein
Ta is a largest time in the first time and/or all second times corresponding to all first links established between the first non-AP MLD and the AP MLD, and Tb is the first time.

11. The method according to any one of claims 1 to 6, wherein the second time is after the first time, and the second time is the TU boundary closest to the first time of the first link.

12. The method according to claim 11, wherein
Ta is the first time, and Tb is a sum of the first time and a length of a TU; or
Ta is the first time, and Tb is a largest time in all second times corresponding to all first links of the AP MLD.

13. The method according to claim 11, wherein
Ta is the first time, and Tb is a largest time in all second times corresponding to all first links established between the first non-AP MLD and the AP MLD.

14. The method according to claim 11, wherein
Ta is the first time, and Tb is a smallest time in the first time and/or all second times corresponding to all first links established between the first non-AP MLD and the AP MLD.

15. The method according to any one of claims 1 to 6, wherein
Ta is a smallest time in the first time and/or all second times corresponding to all first links of the AP MLD, and Tb is a largest time in the first time and/or all the second times corresponding to all the first links of the AP MLD.

16. The method according to any one of claims 1 to 6, wherein
Ta is a smallest time in the first time and/or all second times corresponding to all first links established between the first non-AP MLD and the AP MLD, and Tb is a largest time in the first time and/or all the second times corresponding to all the first links established between the first non-AP MLD and the AP MLD.

17. The method according to claim 8, wherein the first non-AP MLD is any one of the non-AP MLDs that establish multi-link communication with the AP MLD.

18. The method according to any one of claims 1 to 17, wherein the TU boundary is a time point at which the least significant 10 bits of a time synchronization function TSF timer are 0.

19. The method according to any one of claims 1 to 18, wherein the first frame is a beacon frame or a probe response frame.

20. The method according to any one of claims 1 to 19, wherein the effective start time of the TID-to-link mapping is indicated by a mapping switch time (mapping switch time) field in the first frame.

21. The method according to any one of claims 1 to 20, wherein effective start times, indicated by different first frames, of the TID-to-link mapping are different.

22. A communication method, comprising:
receiving, by a non-access point multi-link device non-AP MLD, at least one first frame on at least one first link, wherein the first frame indicates an effective start time of traffic identifier-to-link mapping; and
determining, by the non-AP MLD, a target effective start time of the TID-to-link mapping based on the at least one first frame.

23. The method according to claim 22, wherein effective start times, indicated by different first frames, of the TID-to-link mapping are different.

24. The method according to claim 22 or 23, wherein the determining, by the non-AP MLD, an effective start time of the TID-to-link mapping based on the at least one first frame comprises:
determining, by the non-AP MLD from at least one effective start time, indicated by the at least one first frame, of the TID-to-link mapping, one effective start time of the TID-to-link mapping as the target effective start time of the TID-to-link mapping.

25. The method according to claim 24, wherein the target effective start time of the TID-to-link mapping is a largest effective start time in the at least one effective start time of the TID-to-link mapping.

26. The method according to claim 25, wherein the target effective start time of the TID-to-link mapping is a smallest effective start time in the at least one effective start time of the TID-to-link mapping.

27. The method according to any one of claims 22 to 26, wherein the first frame is a beacon frame or a probe response frame.

28. The method according to any one of claims 22 to 27, wherein the effective start time of the TID-to-link mapping is indicated by a mapping switch time (mapping switch time) field in the first frame.

29. A communication apparatus, comprising a unit or module configured to perform the method according to any one of claims 1 to 21, or comprising a unit or module configured to perform the method according to any one of claims 22 to 28.

30. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 21 or the method according to any one of claims 22 to 28 through a logic circuit or by executing code instructions.
